(19) **Europäisches Patentamt / European Patent Office / Office européen des brevets**

(11) **EP 2 768 190 B1**

(12) **EUROPEAN PATENT SPECIFICATION**

(45) Date of publication and mention of the grant of the patent:
**09.01.2019 Bulletin 2019/02**

(51) Int Cl.:
*H04L 25/02* (2006.01)   *H04B 7/04* (2017.01)
*H04L 27/26* (2006.01)

(21) Application number: **13192655.2**

(22) Date of filing: **13.11.2013**

(54) **Measuring device and measuring method for joint estimation of parameters**

Messvorrichtung und Messverfahren zur gemeinsamen Schätzung von Parametern

Dispositif de mesure et procédé de mesure de paramètres d'estimation conjointe

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2013 EP 13155402**
**16.04.2013 EP 13163952**

(43) Date of publication of application:
**20.08.2014 Bulletin 2014/34**

(73) Proprietor: **Rohde & Schwarz GmbH & Co. KG 81671 München (DE)**

(72) Inventor: **Weikert, Dr., Oomke 81827 Munich (DE)**

(74) Representative: **Körfer, Thomas Mitscherlich PartmbB Patent- und Rechtsanwälte Sonnenstrasse 33 80331 München (DE)**

(56) References cited:

• XIAOQIANG MA ET AL: "Joint frequency offset and channel estimation for ofdm", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 1, 1 December 2003 (2003-12-01), pages 15-19, XP010677837, DOI: 10.1109/GLOCOM.2003.1258193 ISBN: 978-0-7803-7974-9

• MODY A N ET AL: "Joint iterative parameter estimation from the CramÃ CR r-Rao lower bound for an OFDM system", MILITARY COMMUNICATIONS CONFERENCE, 2008. MILCOM 2008. IEEE, IEEE, PISCATAWAY, NJ, USA, 16 November 2008 (2008-11-16), pages 1-7, XP031408072, ISBN: 978-1-4244-2676-8

• FRANCOIS HORLIN ET AL: "Low-Complexity EM-based Joint Acquisition of the Carrier Frequency Offset and IQ Imbalance", IEEE TRANSACTIONS ON WIRELESS COMMUNICATIONS, IEEE SERVICE CENTER, PISCATAWAY, NJ, US, vol. 7, no. 6, 1 June 2008 (2008-06-01), pages 2212-2220, XP011216359, ISSN: 1536-1276

• QIYUE ZOU ET AL: "Compensation of Phase Noise in OFDM Wireless Systems", IEEE TRANSACTIONS ON SIGNAL PROCESSING, IEEE SERVICE CENTER, NEW YORK, NY, US, vol. 55, no. 11, 1 November 2007 (2007-11-01), pages 5407-5424, XP011194673, ISSN: 1053-587X, DOI: 10.1109/TSP.2007.899583

• SALARI S ET AL: "Joint Carrier-Frequency Offset and Channel Estimation for MIMO-OFDM Transmission", WIRELESS PERSONAL COMMUNICATIONS, KLUWER ACADEMIC PUBLISHERS, DO, vol. 47, no. 2, 20 February 2008 (2008-02-20), pages 303-314, XP019617266, ISSN: 1572-834X

EP 2 768 190 B1

**Description**

The present invention relates to a measuring device and a measuring method for determining parameters of a measuring signal, especially carrier frequency error, sample frequency error, phase noise, IQ offset and channel estimation iteratively.

In LTE Advanced UL MIMO the pilot symbols on a subcarrier $k$ and OFDM symbol $l$ are not transmitted exclusively by one layer. If the pilots are transmitted exclusively, like in LTE Advanced DL or Mobile WiMAX, the estimation of carrier frequency offset and sampling frequency offset can be based on correlating two pilot symbols at different OFDM symbols. In addition the estimation of carrier frequency offset and sample frequency offset can be performed separately from IQ offset and channel estimation. In LTE Advanced UL, the pilot symbols on a subcarrier $k$ and OFDM symbol $l$ are transmitted by all layers simultaneously. As the received symbol consists of the sum of all transmitted pilot symbols, the carrier frequency offset and sampling frequency offset estimation approaches used for SISO seems not applicable anymore.

For example the German patent application DE 10 2011 077 390 A1 shows a spectrum analyzer for analyzing mobile communication signals, for example LTE signals. The spectrum analyzer though is disadvantageous, since it is not possible to discern between UL MIMO-Signals, which transmit their pilot symbols simultaneously.

A method and device for determining the channel impulse response of OFDM signals is known from WO 2008/116534 A1. The document "Joint frequency offset and channel estimation for ofdm" by Xiaoqiang Ma discloses joint maximum likelihood estimation of frequency offset and channel. As the joint minimization problem is non-linear, direct joint minimization is not possible, so the method iterates between estimating the frequency offset and the channel. The most recent estimate of the data is used in the estimation of the channel.

Accordingly, the object of the present invention is to provide a measuring device, a measuring system and a measuring method, which are able to accurately measure parameters of a measuring signal comprising at least two signals, which include simultaneous pilot signals.

The object is solved by the features of claim 1 for the measuring device, claim 8 for the measuring system and claim 9 for the measuring method. The dependent claims contain further developments and a computer program product and computer program.

It is possible to determine the parameters even in presence of a first and second signal within the measuring signal.

A low required computational power and a high accuracy can be achieved.

An exemplary embodiment of the invention is now further explained with respect to the drawings, in which

Fig. 1    shows a block diagram of an exemplary embodiment of the inventive measuring device;
Fig. 2    shows a block diagram of a detail of the exemplary embodiment of the measuring device;
Fig. 3    shows a first part of an exemplary embodiment of the inventive measuring method in a flowchart,
Fig. 4    shows a second part of the exemplary embodiment of the inventive measuring method in a flowchart, and
Fig. 5    shows results of the measuring device and measuring method for different signal qualities.

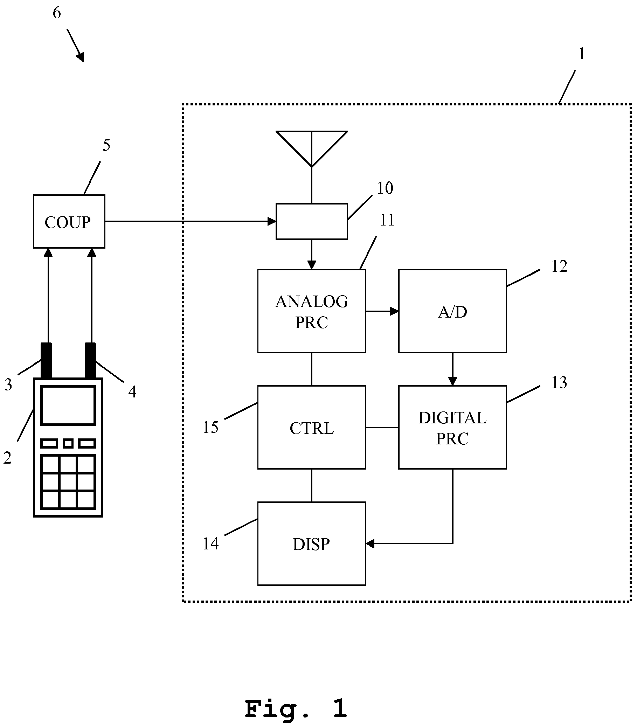

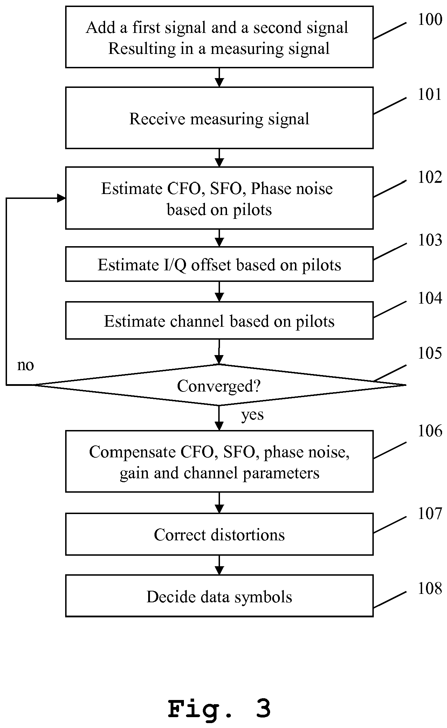

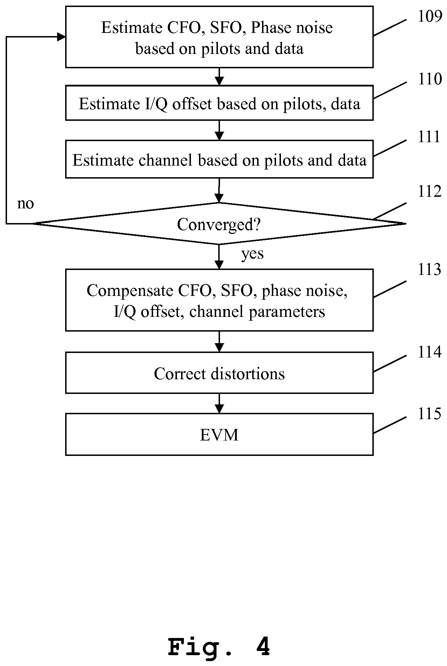

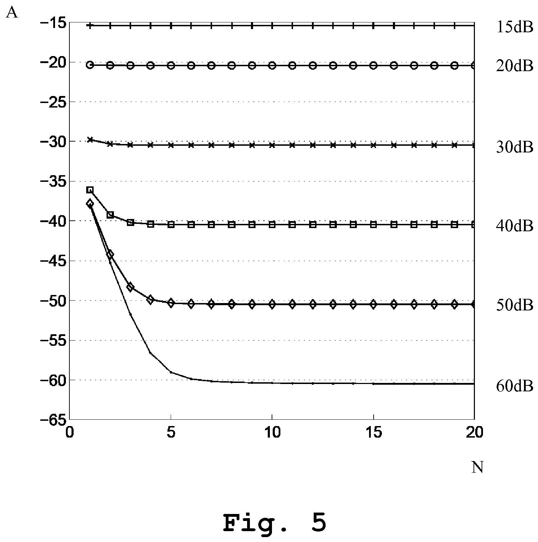

First the general construction and function of an embodiment of the inventive measuring device are demonstrated along Fig. 1 - 2. After that, the function of an exemplary embodiment of the inventive measuring method is shown along Fig. 3 and Fig. 4. Moreover, a detailed description of the underlying mathematics is shown. Finally, along Fig. 5, results of the inventive measuring device and measuring method are explained. Similar entities and reference numbers in different figures have been partially emitted.

In Fig. 1, an exemplary embodiment of the inventive measuring device 1 is shown. A device under test 2 comprises two antennas 3, 4. They are connected to coupling means 5, which are not part of the measuring device 1. The coupling means 5 and the measuring device 1 form a measuring system 6. The coupling means 5 are connected to input means 10, which are part of the measuring device 1. The input means 10 are connected to analog processing means 11, which again are connected to an analog-digital-converter 12. The analog-digital-converter 12 is connected to digital processing means 13, which again are connected to display means 14. Moreover, the measuring device 1 comprises control means 15, which are connected to the analog processing means 11, the digital processing means 13 and the display means 14. The control means 15 are set up for controlling the function of the connected analog processing means 11, the connected digital processing means 13 and the connected display means 14.

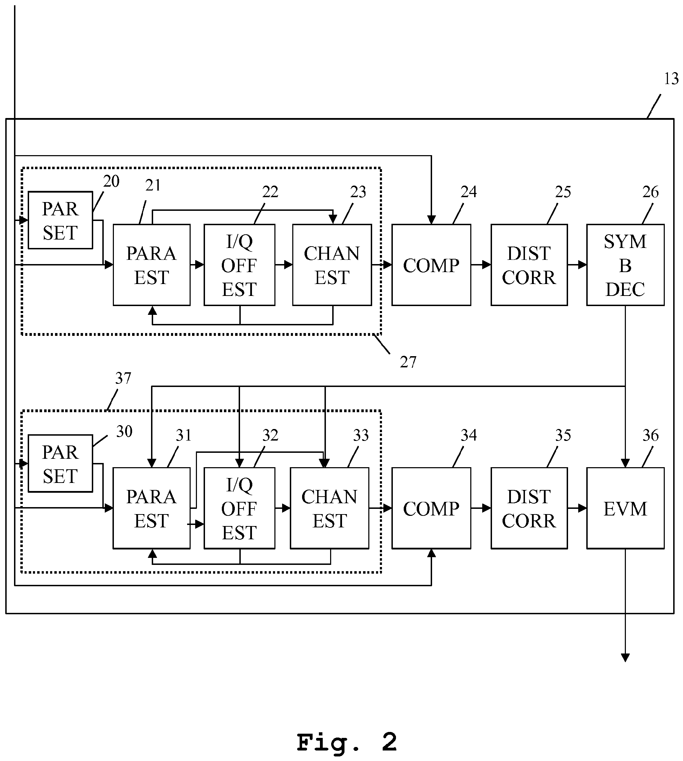

When a measurement is performed, the exemplary device under test 2 sends out at least two signals, each with one of its MIMO antennas 3, 4. These signals are combined into a measuring signal by the coupling means 5. The measuring signal is handed on to the input means 10 of the measuring device 1. The input means 10 comprise for example a preamplifier, which performs a pre-amplification. A resulting signal is handed on to the analog processing means 11, which perform analog processing, for example a frequency reduction to the base band and a filtering. A resulting signal is handed on to the analog-digital-converter 12, which digitizes the signal and hands it on to the digital processing means 13. The digital processing means 13 perform further digital processing, for example a demodulation and a decoding of the individual signals within the measuring signal. Especially though, the digital processing means 13 determine parameters of the measuring signal iteratively. For example, the carrier frequency error, the sample frequency error, the phase noise, the IQ offset and a channel estimation are determined by digital processing means 13. Regarding the function of the digital processing means 13, it is furthermore referred to the elaborations regarding Fig. 2. The results of the digital processing means 13 are handed on to the display means 14 and displayed. Instead of the display means 14, alternatively, output means or storage means can be present within the measuring device 1. In this case, the results of the digital processing means 13 are handed to the output means or to the storage means.

In Fig. 2, the inner workings of the digital processing means 13 of Fig. 1 are shown in a block diagram. An iterative approach is performed to jointly estimate residual CFO, SFO, phase noise, I/Q offset and channel. As channel and CFO are connected in a non-linear fashion, a direct non-iterative solution does not seem to be possible. During each iteration the estimated values change compared to the last iteration. This improvement is an indicator if the iteration has already converged and how accurate the estimated values are. The improvement is calculated. If a predefined number of iterations is reached or if the improvement is smaller than a certain threshold, the iteration is stopped.

The digital processing means 13, comprise first iteration means 27, which comprise first parameter setting means 20, which are connected to first parameter estimation means 21, which are connected with first I/Q offset estimation means 22, which are connected to first channel estimation means 23. The first channel estimation means 23 of the first iteration means 27 are connected to first compensation means 24, which are connected to first distortion correction means 25. The first distortion correction means 25 are connected to first symbol deciding means 26, which are connected to second iteration means 37. The second iteration means 37 comprise second parameter setting means 30, which are connected to second parameter estimation means 31, which are connected to second I/Q offset estimation means 32, which are connected to second channel estimation means 33. The second channel estimation means 33 of the second iteration means 37 are connected to second compensation means 34, which are connected to second distortion correction means 35. The second distortion correction means 35 are furthermore connected to error vector magnitude detection means 36.

The digital measuring signal is handed to the first parameter setting means 20 and the first parameter estimation means 21 of the first iteration means 27. Iteratively, the first parameter estimation means 21 determines carrier frequency offset, sample frequency offset and phase noise of the pilot symbols present within the digital OFDM signal. Since only the pilot symbols are known, processing can only be performed on these symbols. Starting values for the iterative process are set by the first parameter setting means 20.

Abbreviations used in this application are summarized in the following table:

| Abbreviation | Description |
|---|---|
| CFO | Carrier Frequency Offset |
| CPE | Common Phase Error |
| EVM | Error Vector Magnitude |
| MIMO | Multiple In Multiple Out |
| MISO | Multiple In Single Out |
| OFDM | Orthogonal Frequency Domain Multiplexing |
| PRB | Physical Resource Block |
| SISO | Single In Single Out |

| | |
|---|---|
| SFO | Sample frequency offset |
| SNR | Signal to noise ratio |
| SRS | Sounding Reference Symbol |
| UL | Uplink |

After a time to frequency transformation by a FFT of length $N_{FFT}$, the received symbol $r_{l,k}(p_R)$ in frequency domain on subcarrier $k$ at OFDM symbol $l$ of each receive antenna $p_R$ can be expressed as

$$r_{l,k}(p_R) = \underbrace{\exp\left(j\,2\pi \cdot N_s/N_{\text{FFT}} \cdot \zeta \cdot l \cdot k\right)}_{\text{SFO}} \cdot \underbrace{\exp\left(j\,2\pi \cdot N_s/N_{\text{FFT}} \cdot \Delta f T \cdot l\right)}_{\text{res.\,CFO}} \cdot \underbrace{\exp\left(j \cdot d\gamma_l(p_R)\right)}_{\text{phase noise}}$$

$$\cdot \underbrace{\exp\left(-j\,2\pi/N_{\text{FFT}} \cdot D \cdot k\right)}_{\text{delay}} \cdot \left(\sum_{\lambda=0}^{L-1} \widetilde{H}_k(p_R,\lambda) \cdot a_{l,k}(\lambda) + b(p_R) \cdot C_k\right) + n_{l,k}$$

Eq. 1

with

- the relative sampling frequency offset (SFO) $\zeta$,
- the residual carrier frequency offset (CFO) $\Delta f$ in Hz,
- the residual carrier frequency offset normalized to the subcarrier spacing $\Delta f \cdot T$,
- the residual carrier frequency offset normalized to the sample rate $\Delta f \cdot T/N_{FFT}$,
- the OFDM symbol dependent phase noise $d\gamma_l$,
- the fine timing offset or delay $D$,
- the effective complex IQ offset $b$,
- the IQ Offset interference function $C_k$,
- the pilot / DMRS symbol $a_{l,k}(\lambda)$ of layer $\lambda$ on subcarrier $k$ at OFDM symbol $l$,
- the pilot / DMRS symbol $a_{l,k}(\lambda)$ already includes the multiplicative factor $w(m)$ denoting the slot dependent Orthogonal Cover Code (OCC),
- the complex effective channel coefficient $\widetilde{H}_k(p_R,\lambda)$ between layer $\lambda$ and receive antenna $p_R$,
- the number of layers $L$,
- the number of Nyquist samples $N_s$ within the symbol time $T_s$,
- the useful symbol time $T = T_s - T_g$,
- the subcarrier spacing $1/T$,
- and the independent Gaussian distributed noise sample $n_{l,k}$.

The delay does not need to be estimated separately and thus is included into the channel transfer function.

Due to the half subcarrier shift in LTE UL, there is an influence of the IQ Offset $b$ on all subcarriers. The influence is described by the interference function $C_k$ and is different for each subcarrier. The interference function $C_k$ is fixed and known. Consequential there is only one IQ Offset $b$ to be estimated.

If the FFT window of the optimum window is shifted to the position of the useful part of the symbol by a circular shift, the interference function is given by

$$C_k' = e^{j\pi\frac{\Delta n \cdot (2k+1)}{N_{FFT}}} \cdot C_k = e^{j\pi\frac{\Delta n \cdot (2k+1)}{N_{FFT}}} \cdot \text{FFT}\left\{e^{-j\pi\frac{n}{N_{FFT}}}\right\}$$

Eq. 2

with $\Delta n$ as the number of samples in time domain the FFT window starts before the useful part of the symbol, i.e. $\Delta n$ is positive.

If no circular shift of the FFT window of the optimum window is performed, the interference function is given by

$$C_k = \text{FFT}\left\{e^{-j\pi\frac{n}{N_{FFT}}}\right\}.$$

Eq. 3

The SFO, CFO and phase noise are assumed to be the same for all transmit antennas. This assumption holds as long as only one reference oscillator is used in the UE and all mixers in the UE use the same local oscillator (LO).

The channel is different for each subcarrier, while CFO, SFO and phase noise are the same for all subcarriers.

CFO, SFO, Channel and IQ Offset are assumed to be constant over the duration of a subframe. The symbol wise phase noise are assumed to be constant over the duration of one OFDM Symbol.

| | Transmit antenna or layer dependency | Subcarrier dependency | Time dependency |
|---|---|---|---|
| CFO | none | none | constant over the duration of a subframe |
| SFO | none | none | constant over the duration of a subframe |
| Phase noise | none | none | constant over the duration of one OFDM Symbol |
| IQ Offset | none | implicit | constant over the duration of a subframe |
| Channel | layer dependent | Yes | constant over the duration of a subframe |

For MIMO channel estimation only the MISO channel estimation needs to be derived and considered. For each receive antenna an independent MISO channel estimation can be performed.

For MISO Time Alignment Measurement, two transmit antennas are connected to one receive antenna.

There is one important ambiguity which has to be considered in Eq. 1 when estimating CFO and Phase Noise. The CFO is constant over all OFDM symbols while the phase noise is different for each OFDM symbol. Both are independent from the subcarrier. So the symbol independent CFO can be fully described by the symbol wise phase noise. To get no underdetermined system of equations, at first only the preliminary symbol wise phase noise is estimated. By doing that the CFO is included into the preliminary phase noise estimate. Afterwards the preliminary symbol wise phase noise estimate is decomposed into the symbol independent CFO and the correct symbol wise phase noise.

In comparison to other MIMO standards like LTE DL, LTE Advanced DL or Mobile WiMAX, the pilot symbols are not transmitted exclusively by one layer or transmit antenna. If the pilots are transmitted exclusively by one layer, the estimation of CFO and SFO can be based on correlating two pilot symbols at different OFDM symbols. In addition the estimation of CFO/SFO can be performed separately from IQ Offset and channel estimation. In LTE Advanced UL the pilot symbols are transmitted by all layers simultaneously. As the received symbol $r_{l,k}$ consists of the sum of all transmitted pilot symbols, the existing approaches are not possible anymore.

An iterative approach is performed to jointly estimate the parameters residual CFO, SFO, phase noise, IQ Offset and channel. As channel and CFO are connected in a non linear fashion, a direct non-iterative solution does not seem to be possible. This iterative approach is performed by the first iteration means 27 and the second iteration means 37.

During each iteration, the estimated intermediate values of the parameters change compared to last iteration. This improvement is an indicator if the iteration already converged and how accurate the estimated values are. The improvement is calculated. If a predefined number of iterations is reached or if the improvement is smaller than a certain threshold, the iteration is stopped.

In the reference path, which corresponds to the first iteration means 27, the first compensation means 24, the first distortion correction means 25 and the first symbol detection means 26, the estimation is performed for each subframe independently. In the reference path only the DMRS OFDM symbols may be used, so $N_l$ is the number of OFDM symbols per subframe. In case of PUSCH, there are $N_l$ = 2 DMRS OFDM symbols in a subframe.

A good starting point seems to be the ideal DUT which has no impairments. Thus the following starting values are chosen:

- complex IQ offset $b(p_R) = 0$,

- the complex effective channel coefficients are initialized with $\tilde{H}_k(p_R, \lambda) = 1 \; \forall k$.

The determined initial estimated values are handed on to the first I/Q offset estimation means 22, which calculate an I/Q offset based upon the results of the first parameter estimation means 21. The resulting I/Q offset value and the results of the first parameter estimation means 21 are handed on to the first channel estimation means 23, which determine channel parameters based upon the results of the first parameter estimation means on the first I/Q offset estimation means. The resulting channel parameters are handed back to the first parameter estimation means 21. Moreover, also the results of the I/Q offset estimation means 22 are handed back to the first parameter estimation means 21. A second iteration is now performed. The first parameter estimation means 21 calculate the carrier frequency offset, sample frequency offset and phase noise based upon the known pilot symbols, the measured pilot symbols within the digital measuring signal and based upon the determined I/Q offset and the determined channel parameters. The results of the first iteration means are referred to as first parameter set in the following.

The first parameter estimation means 21, the first I/Q offset estimation means 22 and the first channel estimation means 23 can though be placed in any order within the first iteration means 27. Independent of the order, the iterative process uses and starting values during the first iteration and the results from a previous iteration during further iterations. Especially, the following orders are possible:

1. The first parameter estimation means 21 are set up for jointly estimating carrier frequency offset and/or sample frequency offset and/or phase noise based upon initial starting values in a first iteration. The first I/Q offset estimation means 22 are set up for estimating an I/Q offset based upon results of the first parameter estimation means 21. The first channel estimation means 23 are set up for estimating channel parameters based upon results of the first parameter estimation means 21 and the first I/Q offset estimation means 22. The first parameter estimation means 21 are set up for using results of the first I/Q offset estimation means 22 and of the first channel estimation means 23 in further iterations.

2. The first I/Q offset estimation means are set up for estimating an I/Q offset based upon initial starting values in a first iteration. The first channel estimation means are set up for estimating channel parameters based upon the initial starting values and the results of the first I/Q offset estimation means. The first parameter estimation means are set up for jointly estimating carrier frequency offset and/or sample frequency offset and/or phase noise based upon results of the first I/Q offset estimation means and results of the first channel estimation means.

3. The first channel estimation means are set up for estimating channel parameters based upon initial starting values. The first parameter estimation means are set up for jointly estimating carrier frequency offset and/or sample frequency offset and/or phase noise based upon results of the first channel estimation means and the initial starting values. The first I/Q offset estimation means are set up for estimating an I/Q offset based the results of the first channel estimation means and the results of the first parameter estimation means.

4. The first parameter estimation means are set up for jointly estimating carrier frequency offset and/or sample frequency offset and/or phase noise based upon initial starting values in a first iteration. The first channel estimation means are set up for estimating channel parameters based upon the initial starting values and the results of the first parameter estimation means. The first I/Q offset estimation means are set up for estimating an I/Q offset based upon the results of the first channel estimation means and the results of the first parameter estimation means.

5. The first channel estimation means are set up for estimating channel parameters based upon initial starting values. The first I/Q offset estimation means are set up for estimating an I/Q offset based upon results of the first channel estimation means and the initial starting values. The first parameter estimation means are set up for jointly estimating carrier frequency offset and/or sample frequency offset and/or phase noise based upon results of the first I/Q offset estimation means and results of the first channel estimation means.

6. The first I/Q offset estimation means are set up for estimating an I/Q offset based upon initial starting values in a first iteration. The first parameter estimation means are set up for jointly estimating carrier frequency offset and/or sample frequency offset and/or phase noise based upon results of the first I/Q offset estimation means and the initial starting values. The first channel estimation means are set up for estimating channel parameters based upon results of the first parameter estimation means and the first I/Q offset estimation means.

The first iteration means 27 repeat this iterative process for a pre-specified number of iterations or until a convergence of the iteration is reached. The resulting parameters, the carrier frequency offset, sample frequency offset, phase noise, I/Q offset and channel parameters are afterwards handed on to the first compensation means 24, which compensate the digital measuring signal based upon these parameters. A resulting compensated measuring signal is handed on to the first distortion correction means 25, which correct distortions within the signal. A resulting signal is handed on to the symbol deciding means 26, which determines data symbols present within the signal.

The detected data symbols are passed on to the second iteration means 37, which are also supplied with the original digital measuring signal.

An iteration consists of the following estimation steps and optionally the last checking step:

1. Using the above starting values for the channel coefficients and the IQ Offset or the estimated values from the last iteration, the values $F_{l,k}$ according to Eq. 14 for all allocated subcarriers are calculated, but only for the DMRS OFDM symbols.

2. The residual CFO, SFO and phase noise are estimated based on all DMRS OFDM symbols of a subframe.

3. Separate Channel and IQ Offset Estimation

    a. The IQ Offset is estimated according to Eq. 35, if the RBs around the DC subcarrier are allocated. Otherwise it is assumed to be zero during the joint estimation.

    b. Using the estimated CFO, SFO, phase noise and IQ Offset, the values $\tilde{r}_{l,k}(p_R)$ according to Eq. 44 for all allocated subcarriers are calculated, but only for the DMRS OFDM symbols.

    c. Based on $\tilde{r}_{l,k}(p_R)$ the effective channel coefficients $\tilde{H}_k(p_R,\lambda)$ are estimated. The estimation is based on the DMRS OFDM symbols only. The subframe wise channel estimate is used further on. The slot wise channel estimates are not required.

4. Alternative Combined Channel and IQ Offset Estimation (Do not perform this step if step 3 was performed)

    a. Using the estimated CFO, SFO and phase noise, the values $\tilde{r}_{l,k}(p_R)$ according to Eq. 45 for all allocated subcarriers are calculated, but only for the DMRS OFDM symbols.

    b. Channel and IQ Offset Estimation

        i. If the RBs around the DC subcarrier are not allocated, only channel estimation without estimating an IQ Offset is performed.

        ii. If the RBs around the DC subcarrier are allocated, a joint channel and IQ Offset estimation is performed. Based on $\tilde{r}_{l,k}(p_R)$ the IQ Offset (if required) and for each subcarrier its effective channel coefficients $\tilde{H}_k(p_R,\lambda)$ are estimated. The estimation is based on the DMRS OFDM symbols only. The subframe wise channel estimate is used further on. The slot wise channel estimates are not required.

5. Stop iteration if a predefined number of iterations is reached or if the improvement is smaller than a certain threshold.

A similar iterative process is performed by the second iteration means 37. The second parameter setting means 30 set initial starting values. The second parameter estimation means 31 determines carrier frequency offset, sample frequency offset and phase noise based upon the known pilot symbols, the determined data symbols and the set of initial starting values. The set of initial starting values can either be independent from the final parameters of the first iteration means 27. Alternatively, the final parameters of the first iteration means 27 can be used. For example, the I/Q offset is initialized with the estimated values from the reference path. If a payload based channel estimation may be performed, the channel coefficients are for example initialized with the estimated values from the reference path. If only a preamble based channel estimation may be performed, the preamble based channel estimate may be used. No payload based channel estimation is performed in this case during the iterations.

The resulting parameters are handed on to the second I/Q offset estimation means 32, which determine an I/Q offset based upon the parameters determined by the parameter estimation means 31 and based upon the determined data symbols and the known pilot symbols. For reasons of clarity, the lines supplying the original digital measuring signal to the I/Q offset estimation means and the channel estimation means are not shown in Fig. 2.

The second I/Q offset estimation means 32 hands on the estimated I/Q offset to the second channel estimation means 33. Moreover, the parameters determined by the parameter estimation means 31 are also supplied to channel estimation means 33. The second channel estimation means 33 determines a channel estimate based upon the known pilot symbols within the original digital measuring signal, the determined data symbols and based upon the parameters determined by the second parameter estimation means 31 and the second I/Q offset estimation means 32. The resulting channel estimate is handed back to the second parameter estimation means 31, which in a second iteration determines carrier frequency offset sample frequency offset and phase noise based upon the known pilot symbols, the determined data symbols, the determined I/Q offset and the determined channel estimate. The second iteration means 37 also performs a number of iterations in order to finally determine the carrier frequency offset sample frequency offset, phase noise, I/Q offset and channel estimate. Either a set number of iterations is performed or continuous iterations are performed until a convergence of the iteration is reached.

As with the first iteration means 27, the order of the function blocks within the second iteration means 37 is not fixed. The second parameter estimation means 31, the second I/Q offset estimation means 32 and the second channel estimation means can be arranged in any order, as described in detail regarding the first iteration means 27. The results of the second iteration means 37 are referred to as second parameter set in the following.

In the measurement path, which corresponds to the second iteration means 37, the second compensation means 34, the second distortion correction means 35 and the error vector magnitude calculation means 36, the estimation is performed for each slot independently. This is a requirement of the standard. In the measurement path the DMRS and data OFDM symbols with $N_l$ being the number of DMRS and data OFDM symbols of a slot are used. This is required to get an estimate of phase noise for each OFDM symbol. The IQ Offset and the channel coefficients are initialized with the estimated values from the reference path. The iterative estimation is performed as follows. An iteration consists of the following estimation steps and the last checking step:

1. Using the above starting values for the channel coefficients and the IQ Offset or the estimated values from the last iteration, the values $F_{l,k}$ according to Eq. 14 for all allocated subcarriers are calculated, for the DMRS and data OFDM symbols.

2. The residual CFO, SFO and phase noise are estimated based on the DMRS and data OFDM symbols of a subframe.

3. Separate Channel and IQ Offset Estimation

    a. The IQ Offset is estimated according to Eq. 35, if the RBs around the DC subcarrier are allocated. Otherwise it is assumed to be zero during the joint estimation.

    b. Using the estimated CFO, SFO, phase noise and IQ Offset, the values $\tilde{r}_{l,k}(p_R)$ according to Eq. 44 for all allocated subcarriers are calculated, for the DMRS and data OFDM symbols.

    c. Based on $\tilde{r}_{l,k}(p_R)$ the effective and/or physical channel coefficients $\tilde{H}_k(p_R,\lambda)$ are estimated. The estimation is based on the DMRS and data OFDM symbols. The slot wise channel estimate is used further on. A subframe wise channel estimate is not required.

4. Alternative Combined Channel and IQ Offset Estimation (Do not perform this step if step 3 was performed)

    a. Using the estimated CFO, SFO and phase noise, the values $\tilde{r}_{l,k}(p_R)$ according to Eq. 45 for all allocated subcarriers are calculated, for the DMRS and data OFDM symbols.

    b. Channel and IQ Offset Estimation

        i. If the RBs around the DC subcarrier are not allocated, only channel estimation without estimating an IQ Offset is performed.

        ii. If the RBs around the DC subcarrier are allocated, a joint channel and IQ Offset estimation is performed.

    Based on $\tilde{r}_{l,k}(p_R)$ the IQ Offset (if required) and for each subcarrier its effective and/or physical channel coefficients $\tilde{H}_k(p_R,\lambda)$ are estimated. The estimation is based on the DMRS and data OFDM symbols. The slot wise channel estimate is used further on. A subframe wise channel estimate is not required.

5. Stop iteration if a predefined number of iterations is reached or if the improvement is smaller than a certain threshold.

The resulting values are handed on to the second compensation means 34, which compensated the original digital measuring signal using these parameters. A resulting compensated digital signal is handed on to the second distortion correction means 35, which perform a distortion correction of the digital signal. A resulting distortion corrected signal is handed on to the error vector magnitude calculation means 36, which calculates an error vector magnitude based upon the decided symbols, which are provided by the symbol deciding means 26 and based upon the distortion corrected signal. This error vector magnitude is handed on to the display means 14 of Fig. 1 and displayed.

Instead of the error vector magnitude calculating means 36, alternative parameters of the final signal can be determined and displayed. For example, an overall noise level could be used.

In Fig. 3, an exemplary embodiment of the inventive measuring method is shown. Fig. 3 does not show the entire measurement method, but merely a first part. The second part is shown in Fig. 4.

In a first step 100, a measuring signal is created by adding a first signal and a second signal. In a second step 101 the measuring signal is received. In a third step 102 the initial step of an iterative process is performed. For step 102 fixed initial starting values for I/Q offset and channel parameters are used. Carrier frequency offset, sample frequency offset and phase noise are estimated based on known pilots within the received measuring signal.

In a fourth step 103 an I/Q offset is estimated based upon the pilots and based upon the estimated CFO, SFO and phase noise. In a fifth step 104, channel parameters are estimated based upon the estimated CFO, SFO, phase noise and I/Q offset and based upon the known pilot symbols. In a sixth step 105, it is tested, if the iterative process has already converged in case, this is not the case, the steps 102-105 are repeated.

Alternatively to the convergence test of step 105, it is possible to perform a fixed number of iterations.

After this, the received measuring signal is compensated for carrier frequency offset, sample frequency offset, phase noise, I/Q offset and channel parameters. In an eighth step 107, distortions within the resulting compensated measuring signal are corrected. In a ninth step 108 it is decided, which data symbols are present within the resulting distortion corrected measuring signal.

The inventive measuring method is continued in Fig. 4. In a tenth step 109, a second iterative process is started by estimating carrier frequency offset sample frequency offset, phase noise based upon the known pilot symbols and the determined data symbols. For this iteration, final values determined in the previous iterative process of steps 102-104 can be used. Alternatively fixed starting values can be used. In an eleventh step 110, I/Q offset is estimated based upon the determined CFO, SFO, phase noise and based upon the pilot symbols and data symbols.

In a twelfth step 111, channel parameters are estimated based upon the CFO, SFO, phase noise, I/Q offset, pilots and data symbols. In a thirteenth step 112 it is tested, if the iterative process of steps 109-111 has already converged. If this is not the case, a further iteration is started by performing step 109 again using the estimated values of the previous iteration. Alternatively to testing convergence, a fixed number of iterations could be performed. After step 112, CFO, SFO, phase noise, I/Q offset and channel parameters are compensated within the received measuring signal. In a fifteenth step 114, distortions within this signal are corrected. In a final sixteenth step 115, an error vector magnitude is determined based upon the original digital measuring signal and based upon the distortion corrected measuring signal. Alternatively, other parameters can be detected in the sixteenth step.

In the following a detailed derivation of the joint estimation is shown:

The approach uses the PUSCH DMRS symbols of both slots of a subframe and requires that all estimated parameters can be assumed to be constant over this period. Furthermore the approach requires that the same subcarriers / PRBs are active on both slots. As no frequency hopping is allowed for MIMO, this requirement is always fulfilled. The Eq. 1 is rewritten as

$$r_{l,k}(p_R) = \exp(\mathrm{j}\,\Phi) \cdot \left( \sum_{\lambda=0}^{L-1} \widetilde{H}_k(p_R, \lambda) \cdot a_{l,k}(\lambda) + b \cdot C_k \right) + n_{l,k}$$

Eq. 4

with

$$\Phi = 2\pi \cdot N_s / N_{\mathrm{FFT}} \cdot (\zeta \cdot k + \Delta f T) \cdot l + d\gamma_l \quad .$$

Eq. 5

For the ML approach the cost function

$$L = \sum_k \sum_l L_{l,k}$$

Eq. 6

with

$$L_{l,k} = \left| r_{l,k}(p_R) - \exp(\mathrm{j}\,\Phi) \cdot \left( \sum_{\lambda=0}^{L-1} \widetilde{H}_k(p_R,\lambda) \cdot a_{l,k}(\lambda) + b \cdot C_k \right) \right|^2$$

Eq. 7

has to be minimized. The cost function follows to

$$L_{l,k} = \left| r_{l,k}(p_R) \right|^2 - 2 \cdot \mathrm{Re}\left\{ r_{l,k}(p_R) \cdot \left( \exp(\mathrm{j}\,\Phi) \cdot \left( \sum_{\lambda=0}^{L-1} \widetilde{H}_k(p_R,\lambda) \cdot a_{l,k}(\lambda) + b \cdot C_k \right) \right)^* \right\}$$

$$+ \left| \exp(\mathrm{j}\,\Phi) \cdot \left( \sum_{\lambda=0}^{L-1} \widetilde{H}_k(p_R,\lambda) \cdot a_{l,k}(\lambda) + b \cdot C_k \right) \right|^2$$

Eq. 8

and further on to

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{L-1} \widetilde{H}_k(p_R,\lambda) \cdot a_{l,k}(\lambda) + b \cdot C_k \right)^* \right\}$$

$$+ \left| \exp(\mathrm{j}\,\Phi) \cdot \sum_{\lambda=0}^{L-1} \widetilde{H}_k(p_R,\lambda) \cdot a_{l,k}(\lambda) \right|^2 + 2\,\mathrm{Re}\left\{ \exp(\mathrm{j}\,\Phi) \cdot \left( \sum_{\lambda=0}^{L-1} \widetilde{H}_k(p_R,\lambda) \cdot a_{l,k}(\lambda) \right) \cdot \exp(-\mathrm{j}\,\Phi) \cdot b^* \cdot C_k^* \right\}$$

$$+ \left| \exp(\mathrm{j}\,\Phi) \cdot b \cdot C_k \right|^2$$

Eq. 9

and

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{L-1} \widetilde{H}_k(p_R,\lambda) \cdot a_{l,k}(\lambda) \right)^* \right\} - 2 \cdot \mathrm{Re}\left\{ r_{l,k}(p_R) \cdot \exp(-\mathrm{j}\,\Phi) \cdot b^* \cdot C_k^* \right\}$$

$$+ \left| \exp(\mathrm{j}\,\Phi) \cdot \sum_{\lambda=0}^{L-1} \widetilde{H}_k(p_R,\lambda) \cdot a_{l,k}(\lambda) \right|^2 + 2 \cdot \mathrm{Re}\left\{ \left( \sum_{\lambda=0}^{L-1} \widetilde{H}_k(p_R,\lambda) \cdot a_{l,k}(\lambda) \right) \cdot b^* \cdot C_k^* \right\} + \left| \exp(\mathrm{j}\,\Phi) \cdot b \cdot C_k \right|^2$$

Eq. 10

or

$$L_{l,k} = |r_{l,k}(p_R)|^2 - 2 \cdot \mathrm{Re}\left\{r_{l,k}(p_R) \cdot \exp(-\mathrm{j}\,\Phi) \cdot \left(\sum_{\lambda=0}^{L-1} \widetilde{H}_k(p_R,\lambda) \cdot a_{l,k}(\lambda)\right)^*\right\} - 2 \cdot \mathrm{Re}\left\{r_{l,k}(p_R) \cdot \exp(-\mathrm{j}\,\Phi) \cdot b^* \cdot C_k^*\right\}$$
$$+ \left|\exp(\mathrm{j}\,\Phi) \cdot \sum_{\lambda=0}^{L-1} \widetilde{H}_k(p_R,\lambda) \cdot a_{l,k}(\lambda)\right|^2 + 2 \cdot \mathrm{Re}\left\{\left(\sum_{\lambda=0}^{L-1} \widetilde{H}_k(p_R,\lambda) \cdot a_{l,k}(\lambda)\right)^* \cdot b \cdot C_k\right\} + \left|\exp(\mathrm{j}\,\Phi) \cdot b \cdot C_k\right|^2$$

$$\mathrm{Eq.}\ 11$$

To get an equation to determine $\Phi$, i.e. SFO, CFO and phase noise, the cost function Eq. 10 is derived with respect to $\Phi$

$$\frac{d}{d\Phi}L_{l,k} = -2 \cdot \mathrm{Re}\left\{r_{l,k}(p_R) \cdot (-j) \cdot \exp(-\mathrm{j}\,\Phi) \cdot \left(\sum_{\lambda=0}^{L-1} \widetilde{H}_k(p_R,\lambda) \cdot a_{l,k}(\lambda)\right)^*\right\}$$
$$- 2 \cdot \mathrm{Re}\left\{r_{l,k}(p_R) \cdot (-j) \cdot \exp(-\mathrm{j}\,\Phi) \cdot b^* \cdot C_k^*\right\}$$

$$\mathrm{Eq.}\ 12$$

and follows to

$$\frac{d}{d\Phi}L_{l,k} = +2 \cdot \mathrm{Re}\left\{r_{l,k}(p_R) \cdot \left[\left(\sum_{\lambda=0}^{L-1} \widetilde{H}_k(p_R,\lambda) \cdot a_{l,k}(\lambda)\right) + b \cdot C_k\right]^* \cdot j \cdot \exp(-\mathrm{j}\,\Phi)\right\}.$$

$$\mathrm{Eq.}\ 13$$

The derivate is set to zero

$$\frac{d}{d\Phi}L = \sum_k \sum_l \frac{d}{d\Phi}L_{l,k} = \sum_k \sum_l 2 \cdot \mathrm{Re}\left\{\underbrace{r_{l,k}(p_R) \cdot \left[\left(\sum_{\lambda=0}^{L-1} \widetilde{H}_k(p_R,\lambda) \cdot a_{l,k}(\lambda)\right) + b \cdot C_k\right]^*}_{= F_{l,k}(p_R)} \cdot j \cdot \exp(-\mathrm{j}\,\Phi)\right\} \equiv 0$$

$$\mathrm{Eq.}\ 14$$

The expression Eq. 14 gets zero if

$$\boxed{\Phi = \arg\left(F_{l,k}(p_R)\right) \quad \forall l,k}.$$

$$\mathrm{Eq.}\ 15$$

In this case the expression

$$F_{l,k}(p_R) \cdot \exp(-j\,\Phi)$$

Eq. 16

is real and the expression

$$\frac{d}{d\,\Phi}L = \sum_k \sum_l \frac{d}{d\,\Phi}L_{l,k} = \sum_k \sum_l 2 \cdot \mathrm{Re}\{F_{l,k}(p_R) \cdot j \cdot \exp(-j\,\Phi)\} = 0$$

Eq. 17

is zero.

The estimation problem Eq. 15 is a highly over determined system of equations and is solved by Vector Matrix Inversion.

For implementation it should be noted, that an unwrap operation is performed on $\mathrm{arg}(F_{l,k}(p_R))$ for each OFDM Symbol. This eliminates discontinuities.

The number of allocated subcarriers per OFDM symbol is denoted as $N_k$. As no PUSCH frequency hopping is allowed for MIMO, the allocated subcarriers are the same for both slots of a subframe. Additionally, the allocated subcarriers are the same for the DMRS OFDM symbols and data OFDM symbols.

In the reference path only the DMRS OFDM symbols may be used, so $N_l$ is the number of OFDM symbols per subframe. In case of PUSCH, there are $N_l = 2$ DMRS OFDM symbols in a subframe.

In the measurement path the DMRS and data OFDM symbols with $N_l$ being the number of DMRS and data OFDM symbols of a slot are used. This is required to get an estimate of phase noise for each OFDM symbol.

Estimation of SFO and CFO only

For one receive antenna the estimation problem Eq. 18 can be rewritten in matrix vector notation as follows

$$\underbrace{\begin{bmatrix} 2\pi \cdot N_s / N_{\mathrm{FFT}} \cdot l_0 \cdot k_0 & 2\pi \cdot N_s / N_{\mathrm{FFT}} \cdot l_0 \\ \vdots & \vdots \\ 2\pi \cdot N_s / N_{\mathrm{FFT}} \cdot l_0 \cdot k_{N_k-1} & 2\pi \cdot N_s / N_{\mathrm{FFT}} \cdot l_0 \\ 2\pi \cdot N_s / N_{\mathrm{FFT}} \cdot l_1 \cdot k_0 & 2\pi \cdot N_s / N_{\mathrm{FFT}} \cdot l_1 \\ \vdots & \vdots \\ 2\pi \cdot N_s / N_{\mathrm{FFT}} \cdot l_1 \cdot k_{N_k-1} & 2\pi \cdot N_s / N_{\mathrm{FFT}} \cdot l_1 \\ \vdots & \vdots \\ 2\pi \cdot N_s / N_{\mathrm{FFT}} \cdot l_{N_l-1} \cdot k_{N_k-1} & 2\pi \cdot N_s / N_{\mathrm{FFT}} \cdot l_{N_l-1} \end{bmatrix}}_{=A} \cdot \underbrace{\begin{bmatrix} \zeta \\ \Delta fT \end{bmatrix}}_{=x_{CFO,SFO}} = \underbrace{\begin{bmatrix} \mathrm{arg}(F_{l_0,k_0}(p_R)) \\ \vdots \\ \mathrm{arg}(F_{l_0,k_{N_k-1}}(p_R)) \\ \mathrm{arg}(F_{l_1,k_0}(p_R)) \\ \vdots \\ \mathrm{arg}(F_{l_1,k_{N_k-1}}(p_R)) \\ \vdots \\ \mathrm{arg}(F_{l_{N_l-1},k_{N_k-1}}(p_R)) \end{bmatrix}}_{=y(p_R)}$$

Eq. 18

The matrix $A$ and the vector $x_{CFO,SFO}$ are independent from the considered receive antenna $p_R$.

As CFO and SFO are independent from the receive antenna, CFO and SFO are estimated jointly over all receive antennas. Therefore for two receive antennas the estimation problem is written in matrix vector notation as follows

$$\begin{bmatrix} A \\ A \end{bmatrix}_{=B} \cdot x_{CFO,SFO} = \underbrace{\begin{bmatrix} y(0) \\ y(1) \end{bmatrix}}_{=y} \, .$$

$$\text{Eq. 19}$$

The vector $x_{CFO,SFO}$ contains the unknowns while $A$, $B$ and $y$ are known. The matrices $A$ and $B$ and its Pseudoinverse can be calculated once before the first iteration and not in every iteration step. The solution of Eq. 18 is:

$$x_{CFO,SFO} = pinv(A) \cdot y(0)$$

$$\text{Eq. 20}$$

and of Eq. 19 it is

$$x_{CFO,SFO} = pinv(B) \cdot y$$

$$\text{Eq. 21}$$

using the Moore-Penrose Pseudoinverse $pinv(\cdot)$.

Estimation of SFO, CFO and Phase Noise

For one receive antenna the estimation problem Eq. 15 can be rewritten in matrix vector notation as follows

$$\begin{bmatrix} 2\pi \cdot N_s/N_{FFT} \cdot l_0 \cdot k_0 & 2\pi \cdot N_s/N_{FFT} \cdot l_0 & 1 & 0 & \cdots & 0 \\ \vdots & \vdots & 1 & 0 & \cdots & 0 \\ 2\pi \cdot N_s/N_{FFT} \cdot l_0 \cdot k_{N_k-1} & 2\pi \cdot N_s/N_{FFT} \cdot l_0 & 1 & 0 & \cdots & 0 \\ 2\pi \cdot N_s/N_{FFT} \cdot l_1 \cdot k_0 & 2\pi \cdot N_s/N_{FFT} \cdot l_1 & 0 & 1 & \cdots & 0 \\ \vdots & \vdots & 0 & 1 & \cdots & 0 \\ 2\pi \cdot N_s/N_{FFT} \cdot l_1 \cdot k_{N_k-1} & 2\pi \cdot N_s/N_{FFT} \cdot l_1 & 0 & 1 & \cdots & 0 \\ \vdots & \vdots & \vdots & \vdots & \vdots & \vdots \\ 2\pi \cdot N_s/N_{FFT} \cdot l_{N_l-1} \cdot k_{N_k-1} & 2\pi \cdot N_s/N_{FFT} \cdot l_{N_l-1} & 0 & \cdots & 0 & 1 \end{bmatrix} \cdot \underbrace{\begin{bmatrix} \zeta \\ \Delta fT \\ d\gamma_{l_0}(p_R) \\ d\gamma_{l_1}(p_R) \\ \vdots \\ d\gamma_{l_{N_l-1}}(p_R) \end{bmatrix}}_{=x} = \underbrace{\begin{bmatrix} \arg\!\big(F_{l_0,k_0}(p_R)\big) \\ \vdots \\ \arg\!\big(F_{l_0,k_{N_k-1}}(p_R)\big) \\ \arg\!\big(F_{l_1,k_0}(p_R)\big) \\ \vdots \\ \arg\!\big(F_{l_1,k_{N_k-1}}(p_R)\big) \\ \vdots \\ \arg\!\big(F_{l_{N_l-1},k_{N_k-1}}(p_R)\big) \end{bmatrix}}_{=y(p_R)}$$

$$\text{Eq. 22}$$

Due to the described ambiguity CFO vs. Phase Noise, this equation cannot be solved. Instead at first only the preliminary symbol wise phase noise $d\tilde{\gamma}_{l_i}(p_R)$ is estimated. By doing that the CFO is included into the preliminary phase noise estimate. Afterwards the preliminary symbol wise phase noise estimate is decomposed into the symbol independent CFO and the correct symbol wise phase noise $d\gamma_{l_i}(p_R)$. This decomposition is only required once after the last iteration. Due to the ambiguity of CFO and phase noise, it is sufficient to estimate and compensate only the phase noise during the iterations.

For one receive antenna Eq. 22 is written in short hand notation, assuming the CFO to be zero, as follows

$$[C \quad D] \cdot \begin{bmatrix} \zeta \\ x_{\widetilde{\gamma}(0)} \end{bmatrix} = [y(0)]$$

$$\underbrace{[C \quad D]}_{=E} \cdot \underbrace{\begin{bmatrix} \zeta \\ x_{\widetilde{\gamma}(0)} \end{bmatrix}}_{=x} = \underbrace{[y(0)]}_{=y}$$

Eq. 23

with

$$C = \begin{bmatrix} 2\pi \cdot N_s / N_{FFT} \cdot l_0 \cdot k_0 \\ \vdots \\ 2\pi \cdot N_s / N_{FFT} \cdot l_0 \cdot k_{N_k-1} \\ 2\pi \cdot N_s / N_{FFT} \cdot l_1 \cdot k_0 \\ \vdots \\ 2\pi \cdot N_s / N_{FFT} \cdot l_1 \cdot k_{N_k-1} \\ \vdots \\ 2\pi \cdot N_s / N_{FFT} \cdot l_{N_l-1} \cdot k_{N_k-1} \end{bmatrix}, \qquad D = \begin{bmatrix} 1 & 0 & \cdots & 0 \\ 1 & 0 & \cdots & 0 \\ 1 & 0 & \cdots & 0 \\ 0 & 1 & \cdots & 0 \\ 0 & 1 & \cdots & 0 \\ 0 & 1 & \cdots & 0 \\ \vdots & \vdots & \vdots & \vdots \\ 0 & \cdots & 0 & 1 \end{bmatrix},$$

$$x_{\widetilde{\gamma}(p_R)} = \begin{bmatrix} d\widetilde{\gamma}_{l_0}(p_R) \\ d\widetilde{\gamma}_{l_1}(p_R) \\ \vdots \\ d\widetilde{\gamma}_{l_{N_l-1}}(p_R) \end{bmatrix}.$$

Eq. 24

The matrices $C$ and $D$ and the scalar $\zeta$ (SFO) are independent from the considered receive antenna $p_R$.

As CFO and SFO are independent from the receive antenna, CFO and SFO are estimated jointly over all receive antennas. Therefore for two receive antennas the estimation problem is written in matrix vector notation as follows

$$\underbrace{\begin{bmatrix} C & D & 0 \\ C & 0 & D \end{bmatrix}}_{=E} \cdot \underbrace{\begin{bmatrix} \zeta \\ x_{\widetilde{\gamma}(0)} \\ x_{\widetilde{\gamma}(1)} \end{bmatrix}}_{=x} = \underbrace{\begin{bmatrix} y(0) \\ y(1) \end{bmatrix}}_{=y}.$$

Eq. 25

The vector $x$ contains the unknowns while $E$ and $y$ are known. The matrices $E$ and its Pseudoinverse can be calculated once before the first iteration and not in every iteration step.

The solution of Eq. 23 and Eq. 25 is

$$x = pinv(E) \cdot y$$

<div align="right">Eq. 26</div>

using the Moore-Penrose Pseudoinverse $pinv(\cdot)$.

Now the preliminary symbol wise phase noise estimate $d\tilde{\gamma}_{l_i}(p_R)$ is decomposed into the symbol independent CFO and the correct symbol wise phase noise $d\gamma_{l_i}(p_R)$. Therefore the phase noise of the first known OFDM symbol in each subframe is arbitrarily set to zero $d\gamma_{l_0}(p_R) = 0$.

The symbol independent CFO is calculated by

$$\Delta fT = \frac{1}{(N_l - 1) \cdot N_R} \sum_{p_R} \sum_{i=1}^{N_l-1} \frac{d\tilde{\gamma}_{l_i}(p_R) - d\tilde{\gamma}_{l_0}(p_R)}{2\pi \cdot N_s / N_{\mathrm{FFT}} \cdot (l_i - l_0)}$$

<div align="right">Eq. 27</div>

Considering that the phase noise of the first known OFDM symbol should be zero, the symbol wise phase noise of the remaining OFDM symbols follows to

$$\begin{bmatrix} d\gamma_{l_1}(p_R) \\ \vdots \\ d\gamma_{l_{N_l-1}}(p_R) \end{bmatrix} = \begin{bmatrix} d\tilde{\gamma}_{l_1}(p_R) \\ \vdots \\ d\tilde{\gamma}_{l_{N_l-1}}(p_R) \end{bmatrix} - d\tilde{\gamma}_{l_0}(p_R) - \begin{bmatrix} 2\pi \cdot N_s / N_{\mathrm{FFT}} \cdot (l_1 - l_0) \\ \vdots \\ 2\pi \cdot N_s / N_{\mathrm{FFT}} \cdot (l_{N_l-1} - l_0) \end{bmatrix} \cdot \Delta fT \ .$$

<div align="right">Eq. 28</div>

In the reference path, per subframe only the two PUSCH DMRS symbols are known. The phase difference between the two PUSCH DMRS symbols is calculated. Assuming that the phase difference between the symbols is constant in the whole subframe, the CPE for all symbols in the subframe can be estimated by a linear interpolation for the symbols between the two DMRS symbols and a linear extrapolation for the symbols at left and right side of the DMRS symbols.

To get an equation to determine the IQ Offset $b$, the cost function Eq. 10 is derived with respect to $b$

$$\frac{d}{db} L_{l,k} = -2 \cdot \mathrm{Re}\left\{r_{l,k}(p_R) \cdot \exp(-j\Phi) \cdot C_k^*\right\} + 2 \cdot \mathrm{Re}\left\{\left(\sum_{\lambda=0}^{L-1} \tilde{H}_k(p_R, \lambda) \cdot a_{l,k}(\lambda)\right) \cdot C_k^*\right\} + |C_k|^2 \cdot 2 \cdot \mathrm{Re}\{b\}$$

<div align="right">Eq. 29</div>

and follows to

$$\frac{d}{db} L_{l,k} = -2 \cdot \mathrm{Re}\left\{\left[r_{l,k}(p_R) \cdot \exp(-j\Phi) - \left(\sum_{\lambda=0}^{L-1} \tilde{H}_k(p_R, \lambda) \cdot a_{l,k}(\lambda)\right)\right] \cdot C_k^*\right\} + |C_k|^2 \cdot 2 \cdot \mathrm{Re}\{b\}$$

$$.$$

<div align="right">Eq. 30</div>

The derivate is set to zero

$$\frac{d}{db}L = \sum_k \sum_l \frac{d}{db} L_{l,k}$$

$$= \sum_k \sum_l -2 \cdot \mathrm{Re}\left\{\left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^{*}\right\} + \sum_k \sum_l |C_k|^2 \cdot 2 \cdot \mathrm{Re}\{b\} \equiv 0$$

Eq. 31

It follows

$$\sum_k \sum_l 2 \cdot \mathrm{Re}\left\{\left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^{*}\right\} = \sum_k \sum_l |C_k|^2 \cdot 2 \cdot \mathrm{Re}\{b\}$$

Eq. 32

As summation and taking the real part can be exchanged, it follows

$$2 \cdot \mathrm{Re}\left\{\sum_k \sum_l \left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^{*}\right\} = 2 \cdot \mathrm{Re}\left\{b \cdot \sum_k \sum_l |C_k|^2\right\}$$

Eq. 33

Omit to take the real part, it follows

$$\sum_k \sum_l \left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^{*} = b \cdot \sum_k \sum_l |C_k|^2 \ .$$

Eq. 34

The IQ Offset is estimated for each receive antenna by

$$b(p_R) = \frac{\sum_k \sum_l \left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^{*}}{\sum_k \sum_l |C_k|^2} \ .$$

Eq. 35

To get an equation to determine the channel coefficients $\widetilde{H}_k(p_R,\lambda)$, the cost function Eq. 11 is derived with respect to $\widetilde{H}_k(p_R,\lambda_i)$

$$\frac{d}{d\,\widetilde{H}_k(p_R,\lambda_i)}L_{l,k} = -2\cdot\mathrm{Re}\left\{r_{l,k}(p_R)\cdot\exp(-\mathrm{j}\,\Phi)\cdot a_{l,k}^{\ *}(\lambda_i)\right\}$$

$$+\,2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^{\ *}(\lambda_i)\right\}+2\cdot\mathrm{Re}\left\{a_{l,k}^{\ *}(\lambda_i)\cdot b\cdot C_k\right\}$$

$$\text{Eq. 36}$$

and follows to

$$\frac{d}{d\,\widetilde{H}_k(p_R,\lambda_i)}L_{l,k} = -2\cdot\mathrm{Re}\left\{\left[r_{l,k}(p_R)\cdot\exp(-\mathrm{j}\,\Phi)-b\cdot C_k\right]\cdot a_{l,k}^{\ *}(\lambda_i)\right\}+2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^{\ *}(\lambda_i)\right\}$$

$$\text{Eq. 37}$$

The derivate is set to zero

$$\frac{d}{d\,\widetilde{H}_k(p_R,\lambda_i)}L = \sum_k\sum_l\frac{d}{d\,\widetilde{H}_k(p_R,\lambda_i)}L_{l,k}$$

$$=\sum_k\sum_l -2\cdot\mathrm{Re}\left\{\left[r_{l,k}(p_R)\cdot\exp(-\mathrm{j}\,\Phi)-b\cdot C_k\right]\cdot a_{l,k}^{\ *}(\lambda_i)\right\}+\sum_k\sum_l 2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^{\ *}(\lambda_i)\right\}\equiv 0$$

$$\text{Eq. 38}$$

It follows

$$\sum_k\sum_l -2\cdot\mathrm{Re}\left\{\left[r_{l,k}(p_R)\cdot\exp(-\mathrm{j}\,\Phi)-b\cdot C_k\right]\cdot a_{l,k}^{\ *}(\lambda_i)\right\}=\sum_k\sum_l 2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^{\ *}(\lambda_i)\right\}$$

$$\text{Eq. 39}$$

As summation and taking the real part can be exchanged, it follows

$$2\cdot\mathrm{Re}\left\{\sum_k\sum_l\left[r_{l,k}(p_R)\cdot\exp(-\mathrm{j}\,\Phi)-b\cdot C_k\right]\cdot a_{l,k}^{\ *}(\lambda_i)\right\}=2\cdot\mathrm{Re}\left\{\sum_k\sum_l\left(\sum_{\lambda=0}^{L-1}\widetilde{H}_k(p_R,\lambda)\cdot a_{l,k}(\lambda)\right)\cdot a_{l,k}^{\ *}(\lambda_i)\right\}$$

$$\text{Eq. 40}$$

Omit to take the real part, it follows

$$\boxed{\sum_k\sum_l\left[r_{l,k}(p_R)\cdot\exp(-\mathrm{j}\,\Phi)-b(p_R)\cdot C_k\right]=\sum_k\sum_l\left(\sum_{\lambda=0}^{L-1}\widetilde{H}_k(p_R,\lambda)\cdot a_{l,k}(\lambda)\right)}$$

$$\text{Eq. 41}$$

The channel coefficients $\tilde{H}_k(p_R, \lambda)$ are determined by solving the above system of equations.

The IQ Offset has only significant influence on the Resource Blocks (RB) around the DC subcarrier.

Channel Estimation without estimating an IQ Offset

If the RBs around the DC subcarrier are not allocated, the channel estimate is not influenced by the IQ Offset and the IQ Offset does not need to be estimated during Joint Estimation. In this case the IQ Offset can be estimated after Joint Estimation on the unallocated RBs around the DC subcarrier.

Using the estimated CFO, SFO and phase noise, the values

$$\tilde{r}_{l,k}(p_R) = r_{l,k}(p_R) \cdot \exp(-\mathrm{j}\,\Phi)$$

Eq. 42

for all allocated subcarriers are calculated.

Based on $\tilde{r}_{l,k}(p_R)$ a MIMO Channel estimation as described in chapter "Channel Estimation for MIMO over the Air Mode" is performed. As shown in the above mentioned chapter, to get no under-determined system of equations, in case of two layers or two transmit antennas the channel coefficients of two adjacent subcarriers

$$\tilde{H}_k(p_R, \lambda) = \tilde{H}_{k+1}(p_R, \lambda)$$

Eq. 43

are assumed to be equal.

Separate Channel and IQ Offset Estimation

If the RBs around the DC subcarrier are allocated, an IQ Offset estimation is required. The channel and the IQ Offset are estimated separately. At first the IQ Offset is estimated according to Eq. 35. Afterwards using the estimated CFO, SFO, phase noise and IQ Offset, the values

$$\tilde{r}_{l,k}(p_R) = r_{l,k}(p_R) \cdot \exp(-\mathrm{j}\,\Phi) - b(p_R) \cdot C_k$$

Eq. 44

for all allocated subcarriers are calculated. Based on $\tilde{r}_{l,k}(p_R)$ a pure channel estimation as described is performed.

If sequence and grouping hopping are off, the PUSCH DMRS symbols of both slots can be equal. In this case the IQ Offset does not change anymore after the first iteration. However simulations showed that this first IQ Offset estimate is already accurate enough.

Alternative Combined Channel and IQ Offset Estimation

If the RBs around the DC subcarrier are allocated, an IQ Offset estimation is required. A combined channel and IQ Offset estimation is performed. Simulation results showed that this approach is less accurate than the separate channel and IQ Offset estimation.

Using the estimated CFO, SFO and phase noise, the values

$$\tilde{r}_{l,k}(p_R) = r_{l,k}(p_R) \cdot \exp(-\mathrm{j}\,\Phi)$$

Eq. 45

for all allocated subcarriers are calculated.

Based on $\tilde{r}_{l,k}(p_R)$ a joint MIMO Channel and IQ Offset estimation as described is performed. As shown in the above mentioned chapter, to get no under-determined system of equations, in case of two layers or two transmit antennas the channel coefficients of three adjacent subcarriers

$$\tilde{H}_k(p_R,\lambda) = \tilde{H}_{k+1}(p_R,\lambda) = \tilde{H}_{k+2}(p_R,\lambda)$$

<div align="right">Eq. 46</div>

are assumed to be equal.

It has to be distinguished between the channel estimation of the effective and the physical channel. While the effective channel estimate is required to set up a reference signal for the layer and transmit antennas, the physical channel estimate is required to calculate the measurement signal for the transmit antennas and for MISO Time Alignment Measurement. For MISO Time Alignment Measurement, two transmit antennas are connected to one receive antenna.

After the compensation of SFO, CFO and IQ Offset, the received symbol $r_{l,k}(p_R)$ in frequency domain on subcarrier $k$ at OFDM symbol $l$ of each receive antenna $p_R$ can be expressed as

$$r_{l,k}(p_R) = \sum_{\lambda=0}^{L-1} \tilde{H}_k(p_R,\lambda) \cdot a_{l,k}(\lambda) + n_{l,k}$$

<div align="right">Eq. 47</div>

or

$$r_{l,k}(p_R) = \sum_{p_T=0}^{N_T} H_k(p_R,p_T) \cdot \sum_{\lambda=0}^{L-1} W(p_T,\lambda) \cdot a_{l,k}(\lambda) + n_{l,k}$$

<div align="right">Eq. 48</div>

with the transmit antenna symbol

$$s_{l,k}(p_T) = \sum_{\lambda=0}^{L-1} W(p_T,\lambda) \cdot a_{l,k}(\lambda)$$

<div align="right">Eq. 49</div>

and

- the pilot / DMRS symbol $a_{l,k}(\lambda)$ of layer $\lambda$ on subcarrier $k$ at OFDM symbol $l$,
- the pilot / DMRS symbol $a_{l,k}(\lambda)$ already includes the multiplicative factor $w(m)$ denoting the slot dependent Orthogonal Cover Code (OCC),
- the complex precoding factor $W(p_T,\lambda)$ of precoding matrix $W$ from layer $\lambda$ to transmit antenna $p_T$,
- the physical channel coefficient $H_k(p_R,p_T)$ between transmit antenna $p_T$ and receive antenna $p_R$,
- the effective channel coefficient $\tilde{H}_k(p_R,\lambda)$ between layer $\lambda$ and receive antenna $p_R$,
- the number of layers $L$,
- and the independent Gaussian distributed noise sample $n_{l,k}$.

For each receive antenna and each subcarrier an independent MISO channel estimation can be performed. Thus for MIMO channel estimation only the MISO channel estimation needs to be derived and considered.

In the following the MISO channel estimation for a specific receive antenna on a specific subcarrier is derived.

Channel Estimation without estimating an IQ Offset

To get no under-determined system of equations, in case of two layers or two transmit antennas the channel coefficients of two adjacent subcarriers

$$\widetilde{H}_k(p_R, \lambda) = \widetilde{H}_{k+1}(p_R, \lambda)$$

Eq. 50

are assumed to be equal. In case of four layers or four transmit antennas the channel coefficients of four adjacent subcarriers

$$\widetilde{H}_k(p_R, \lambda) = \widetilde{H}_{k+1}(p_R, \lambda) = \widetilde{H}_{k+2}(p_R, \lambda) = \widetilde{H}_{k+3}(p_R, \lambda)$$

Eq. 51

are assumed to be equal.

Joint Channel and IQ Offset Estimation

To get no under-determined system of equations, in case of two layers or two transmit antennas the channel coefficients of three adjacent subcarriers

$$\widetilde{H}_k(p_R, \lambda) = \widetilde{H}_{k+1}(p_R, \lambda) = \widetilde{H}_{k+2}(p_R, \lambda)$$

Eq. 52

are assumed to be equal. In case of four layers or four transmit antennas the channel coefficients of five adjacent subcarriers

$$\widetilde{H}_k(p_R, \lambda) = \widetilde{H}_{k+1}(p_R, \lambda) = \widetilde{H}_{k+2}(p_R, \lambda) = \widetilde{H}_{k+3}(p_R, \lambda) = \widetilde{H}_{k+4}(p_R, \lambda)$$

Eq. 53

are assumed to be equal.

In the following table the possible channel estimations are summarized. In the following chapters each channel estimation is derived and described.

| Number of layers | Number of transmit antennas | Effective MISO Channel Estimation | Physical MISO Channel Estimation |
|---|---|---|---|
| 1 | 1 | ○ | ○ |
| 1 | 2 | ○ | ● |
| 1 | 4 | ○ | ● |

(continued)

| Number of layers | Number of transmit antennas | Effective MISO Channel Estimation | Physical MISO Channel Estimation |
|---|---|---|---|
| 2 | 2 | ○ | ○ |
| 2 | 4 | ○ | ● |
| 3 | 4 | ○ | ● |
| 4 | 4 | ○ | ○ |

The channel estimation can be performed subframe wise or for each slot independently.

For each group of two to five subcarriers a (joint) estimation of IQ Offset (if required) and effective channel is performed.

For each group of two to five subcarriers an IQ Offset estimate is achieved. The final IQ Offset estimate is the mean of the IQ Offset estimates.

For each group of two to five subcarriers one channel coefficient per layer is achieved. The achieved channel coefficient is valid for the subcarrier in the middle of the group. The channel coefficients on the intermediate subcarriers are achieved by interpolation. A linear interpolation may be used.

The physical channel estimate is calculated using the effective channel estimate and the precoding matrix.

Example for interpolation of channel coefficients on intermediate subcarriers

Consider the joint estimation of IQ Offset and effective MISO Channel for two layers. In this case for each group of three subcarriers one channel coefficient per layer is achieved. So for the subcarrier group $k = 0,1,2$ the channel coefficient $\tilde{H}_1(p_R,\lambda)$ and for the subcarrier group $k = 3,4,5$ the channel coefficient $\tilde{H}_4(p_R,\lambda)$ is achieved. The channel coefficients $\tilde{H}_2(p_R,\lambda)$ and $\tilde{H}_3(p_R,\lambda)$ are achieved by linear interpolation according to

$$\tilde{H}_2(p_R,\lambda) = \frac{2}{3}\tilde{H}_1(p_R,\lambda) + \frac{1}{3}\tilde{H}_4(p_R,\lambda)$$

$$\tilde{H}_3(p_R,\lambda) = \frac{1}{3}\tilde{H}_1(p_R,\lambda) + \frac{2}{3}\tilde{H}_4(p_R,\lambda)$$

$$\text{Eq. 54}$$

The following approach uses the PUSCH DMRS symbols only.

Slot wise estimation

To perform the estimation per slot independently, in case of up to two layers, collecting the known DMRS symbols of two adjacent subcarriers in the matrix

$$B = \begin{bmatrix} a_{l,k}(0) & a_{l,k}(1) \\ a_{l,k+1}(0) & a_{l,k+1}(1) \end{bmatrix},$$

$$\text{Eq. 55}$$

the effective channel estimation problem Eq. 47 can be rewritten with Eq. 43 in matrix vector notation according to

$$\begin{bmatrix} r_{l,k}(p_R) \\ r_{l,k+1}(p_R) \end{bmatrix} = B \cdot \begin{bmatrix} \widetilde{H}_k(p_R,0) \\ \widetilde{H}_k(p_R,1) \end{bmatrix} + \begin{bmatrix} n_{l,k} \\ n_{l,k+1} \end{bmatrix}$$

$$\underbrace{\phantom{\begin{bmatrix} r_{l,k}(p_R) \\ r_{l,k+1}(p_R) \end{bmatrix}}}_{r_{l,k}(p_R)} \quad \underbrace{\phantom{\begin{bmatrix} \widetilde{H}_k(p_R,0) \\ \widetilde{H}_k(p_R,1) \end{bmatrix}}}_{\widetilde{H}_k(p_R)}$$

Eq. 56

with the column vectors $\widetilde{H}_k(p_R)$ and $r_{l,k}(p_R)$.

Whether a solution for the channel estimation problem exists, depends on the condition of the matrix *B*.

The zero forcing channel estimate follows to

$$\hat{\widetilde{H}}_k(p_R) = B^{-1} \cdot r_{l,k}(p_R).$$

Subframe wise estimation

To perform a subframe wise estimation, in case of up to two layers, collecting the known DMRS symbols of two adjacent subcarriers of both slots in the matrix

$$B_{SF} = \begin{bmatrix} a_{L,k}(0) & a_{L,k}(1) \\ a_{L,k+1}(0) & a_{L,k+1}(1) \\ a_{R,k}(0) & a_{R,k}(1) \\ a_{R,k+1}(0) & a_{R,k+1}(1) \end{bmatrix},$$

Eq. 57

the effective channel estimation problem Eq. 6.1 can be rewritten with Eq. 43 in matrix vector notation according to

$$\begin{bmatrix} r_{L,k}(p_R) \\ r_{L,k+1}(p_R) \\ r_{R,k}(p_R) \\ r_{R,k+1}(p_R) \end{bmatrix} = B_{SF} \cdot \begin{bmatrix} \widetilde{H}_k(p_R,0) \\ \widetilde{H}_k(p_R,1) \end{bmatrix} + \begin{bmatrix} n_{L,k} \\ n_{L,k+1} \\ n_{R,k} \\ n_{R,k+1} \end{bmatrix}$$

$$\underbrace{\phantom{xxxxxxx}}_{r_{SF,k}(p_R)} \qquad \underbrace{\phantom{xxxx}}_{\widetilde{H}_k(p_R)}$$

Eq. 58

with the column vectors $\widetilde{H}_k(p_R)$ and $r_{SF,k}(p_R)$.

Whether a solution for the channel estimation problem exists, depends on the condition of the matrix $B_{SF}$.

The zero forcing channel estimate follows to

$$\hat{\widetilde{H}}_k(p_R) = pinv(B_{SF}) \cdot r_{SF,k}(p_R).$$

Special Case with one Layer

In case of only one layer, $a_{l,k}(1) = a_{l,k+1}(1) = 0$ and $\widetilde{H}_k(p_R,1) = 0$ resulting in the SISO channel estimation problem.

Using the DMRS on the layer for channel estimation, the effective channel(s) from the one and only layer to the receive antenna(s) are estimated. So a reference and a measurement signal for the one and only layer can be generated.

Slot wise estimation

To perform the estimation per slot independently, in case of up to two layers, collecting the known DMRS symbols of three adjacent subcarriers and the IQ Offset interference function $C_k$ in the matrix

$$B_{IQ} = \begin{bmatrix} a_{l,k}(0) & a_{l,k}(1) & C_k \\ a_{l,k+1}(0) & a_{l,k+1}(1) & C_{k+1} \\ a_{l,k+2}(0) & a_{l,k+2}(1) & C_{k+2} \end{bmatrix},$$

$$\text{Eq. 59}$$

the effective channel estimation problem Eq. 47 can be rewritten with Eq. 52 in matrix vector notation according to

$$\underbrace{\begin{bmatrix} r_{l,k}(p_R) \\ r_{l,k+1}(p_R) \\ r_{l,k+2}(p_R) \end{bmatrix}}_{r_{l,k}(p_R)} = B_{IQ} \cdot \underbrace{\begin{bmatrix} \tilde{H}_k(p_R,0) \\ \tilde{H}_k(p_R,1) \\ b(p_R) \end{bmatrix}}_{x_k(p_R)} + \begin{bmatrix} n_{l,k} \\ n_{l,k+1} \\ n_{l,k+2} \end{bmatrix}$$

$$\text{Eq. 60}$$

with the column vectors $x_k(p_R)$ and $r_{l,k}(p_R)$.

Whether a solution for the channel estimation problem exists, depends on the condition of the matrix $B_{IQ}$.

The zero forcing IQ Offset and channel estimate follows to

$$x_k(p_R) = B_{IQ}^{-1} \cdot r_{l,k}(p_R) .$$

Subframe wise estimation

To perform a subframe wise estimation, in case of up to two layers, collecting the known DMRS symbols of three adjacent subcarriers of both slots and the IQ Offset interference function $C_k$ in the matrix

$$B_{IQ,SF} = \begin{bmatrix} a_{L,k}(0) & a_{L,k}(1) & C_k \\ a_{L,k+1}(0) & a_{L,k+1}(1) & C_{k+1} \\ a_{L,k+2}(0) & a_{L,k+2}(1) & C_{k+2} \\ a_{R,k}(0) & a_{R,k}(1) & C_k \\ a_{R,k+1}(0) & a_{R,k+1}(1) & C_{k+1} \\ a_{R,k+2}(0) & a_{R,k+2}(1) & C_{k+2} \end{bmatrix},$$

$$\text{Eq. 61}$$

the effective channel estimation problem Eq. 47 can be rewritten with Eq. 52 in matrix vector notation according to

$$
\underbrace{\begin{bmatrix} r_{L,k}(p_R) \\ r_{L,k+1}(p_R) \\ r_{L,k+2}(p_R) \\ r_{R,k}(p_R) \\ r_{R,k+1}(p_R) \\ r_{R,k+2}(p_R) \end{bmatrix}}_{r_{SF,k}(p_R)} = B_{IQ,SF} \cdot \underbrace{\begin{bmatrix} \tilde{H}_k(p_R,0) \\ \tilde{H}_k(p_R,1) \\ b(p_R) \end{bmatrix}}_{x_k(p_R)} + \begin{bmatrix} n_{L,k} \\ n_{L,k+1} \\ n_{L,k+2} \\ n_{R,k} \\ n_{R,k+1} \\ n_{R,k+2} \end{bmatrix}
$$

Eq. 62

with the column vectors $x_k(p_R)$ and $r_{SF,k}(p_R)$.

Whether a solution for the channel estimation problem exists, depends on the condition of the matrix $B_{IQ,SF}$.

The zero forcing IQ Offset and channel estimate follows to

$$
x_k(p_R) = pinv(B_{IQ,SF}) \cdot r_{SF,k}(p_R) .
$$

Slot wise estimation

To perform the estimation per slot independently, in case of up to four layers, collecting the known DMRS symbols of four adjacent subcarriers in the matrix

$$
C = \begin{bmatrix} a_{l,k}(0) & a_{l,k}(1) & a_{l,k}(2) & a_{l,k}(3) \\ a_{l,k+1}(0) & a_{l,k+1}(1) & a_{l,k+1}(2) & a_{l,k+1}(3) \\ a_{l,k+2}(0) & a_{l,k+2}(1) & a_{l,k+2}(2) & a_{l,k+2}(3) \\ a_{l,k+3}(0) & a_{l,k+3}(1) & a_{l,k+3}(2) & a_{l,k+3}(3) \end{bmatrix},
$$

Eq. 63

the effective channel estimation problem Eq. 47 can be rewritten with Eq. 51 in matrix vector notation according to

$$
\underbrace{\begin{bmatrix} r_{l,k}(p_R) \\ r_{l,k+1}(p_R) \\ r_{l,k+2}(p_R) \\ r_{l,k+3}(p_R) \end{bmatrix}}_{r_{l,k}(p_R)} = C \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \end{bmatrix}}_{\tilde{H}_k(p_R)} + \begin{bmatrix} n_{l,k} \\ n_{l,k+1} \\ n_{l,k+2} \\ n_{l,k+3} \end{bmatrix}
$$

Eq. 64

with the column vectors $\tilde{H}_k(p_R)$ and $r_{l,k}(p_R)$.

Whether a solution for the channel estimation problem exists, depends on the condition of the matrix $C$.

The zero forcing channel estimate follows to

$$
\tilde{\tilde{H}}_k(p_R) = C^{-1} \cdot r_{l,k}(p_R) .
$$

Subframe wise estimation

To perform a subframe wise estimation, in case of up to four layers, collecting the known DMRS symbols of four adjacent subcarriers of both slots in the matrix

$$C_{SF} = \begin{bmatrix} C_L \\ C_R \end{bmatrix},$$

Eq. 65

the effective channel estimation problem Eq. 47 can be rewritten with Eq. 51 in matrix vector notation according to

$$\underbrace{\begin{bmatrix} r_{L,k}(p_R) \\ r_{L,k+1}(p_R) \\ r_{L,k+2}(p_R) \\ r_{L,k+3}(p_R) \\ r_{R,k}(p_R) \\ r_{R,k+1}(p_R) \\ r_{R,k+2}(p_R) \\ r_{R,k+3}(p_R) \end{bmatrix}}_{r_{SF,k}(p_R)} = C_{SF} \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \end{bmatrix}}_{\tilde{H}_k(p_R)} + \begin{bmatrix} n_{L,k} \\ n_{L,k+1} \\ n_{L,k+2} \\ n_{L,k+3} \\ n_{R,k} \\ n_{R,k+1} \\ n_{R,k+2} \\ n_{R,k+3} \end{bmatrix}$$

Eq. 66

with the column vectors $\tilde{H}_k(p_R)$ and $r_{SF,k}(p_R)$.

Whether a solution for the channel estimation problem exists, depends on the condition of the matrix $C_{SF}$.

The zero forcing channel estimate follows to

$$\hat{\tilde{H}}_k(p_R) = pinv(C_{SF}) \cdot r_{SF,k}(p_R).$$

Special Case with three Layers

In case of three layers, $a_{l,k}(3) = 0 \ \forall k$ and $\tilde{H}_k(p_R,3) = 0$, the matrix $C$ has only three rows and columns resulting in one dimension less for the estimation problem. The effective MISO channels can be estimated.

Slot wise estimation

To perform the estimation per slot independently, in case of up to four layers, collecting the known DMRS symbols of five adjacent subcarriers and the IQ Offset interference function $C_k$ in the matrix

$$C_{IQ} = \begin{bmatrix} a_{l,k}(0) & a_{l,k}(1) & a_{l,k}(2) & a_{l,k}(3) & C_k \\ a_{l,k+1}(0) & a_{l,k+1}(1) & a_{l,k+1}(2) & a_{l,k+1}(3) & C_{k+1} \\ a_{l,k+2}(0) & a_{l,k+2}(1) & a_{l,k+2}(2) & a_{l,k+2}(3) & C_{k+2} \\ a_{l,k+3}(0) & a_{l,k+3}(1) & a_{l,k+3}(2) & a_{l,k+3}(3) & C_{k+3} \\ a_{l,k+4}(0) & a_{l,k+4}(1) & a_{l,k+4}(2) & a_{l,k+4}(3) & C_{k+4} \end{bmatrix},$$

Eq. 67

the effective channel estimation problem Eq. 47 can be rewritten with Eq. 53 in matrix vector notation according to

$$\underbrace{\begin{bmatrix} r_{l,k}(p_R) \\ r_{l,k+1}(p_R) \\ r_{l,k+2}(p_R) \\ r_{l,k+3}(p_R) \\ r_{l,k+4}(p_R) \end{bmatrix}}_{r_{l,k}(p_R)} = C_{IQ} \cdot \underbrace{\begin{bmatrix} \tilde{H}_k(p_R,0) \\ \tilde{H}_k(p_R,1) \\ \tilde{H}_k(p_R,2) \\ \tilde{H}_k(p_R,3) \\ b(p_R) \end{bmatrix}}_{x_k(p_R)} + \begin{bmatrix} n_{l,k} \\ n_{l,k+1} \\ n_{l,k+2} \\ n_{l,k+3} \\ n_{l,k+4} \end{bmatrix}$$

Eq. 68

with the column vectors $x_k(p_R)$ and $r_{l,k}(p_R)$.

Whether a solution for the channel estimation problem exists, depends on the condition of the matrix $C_{IQ}$.

The zero forcing channel estimate follows to

$$x_k(p_R) = C_{IQ}^{-1} \cdot r_{l,k}(p_R).$$

Subframe wise estimation

To perform a subframe wise estimation, in case of up to four layers, collecting the known DMRS symbols of five adjacent subcarriers of both slots and the IQ Offset interference function $C_k$ in the matrix

$$C_{IQ,SF} = \begin{bmatrix} C_{IQ,L} \\ C_{IQ,R} \end{bmatrix},$$

Eq. 69

the effective channel estimation problem Eq. 47 can be rewritten with Eq. 53 in matrix vector notation according to

$$\underbrace{\begin{bmatrix} r_{L,k}(p_R) \\ r_{L,k+1}(p_R) \\ r_{L,k+2}(p_R) \\ r_{L,k+3}(p_R) \\ r_{L,k+4}(p_R) \\ r_{R,k}(p_R) \\ r_{R,k+1}(p_R) \\ r_{R,k+2}(p_R) \\ r_{R,k+3}(p_R) \\ r_{R,k+4}(p_R) \end{bmatrix}}_{r_{SF,k}(p_R)} = C_{IQ,SF} \cdot \underbrace{\begin{bmatrix} \widetilde{H}_k(p_R,0) \\ \widetilde{H}_k(p_R,1) \\ \widetilde{H}_k(p_R,2) \\ \widetilde{H}_k(p_R,3) \\ b(p_R) \end{bmatrix}}_{x_k(p_R)} + \begin{bmatrix} n_{L,k} \\ n_{L,k+1} \\ n_{L,k+2} \\ n_{L,k+3} \\ n_{L,k+4} \\ n_{R,k} \\ n_{R,k+1} \\ n_{R,k+2} \\ n_{R,k+3} \\ n_{R,k+4} \end{bmatrix}$$

Eq. 70

with the column vectors $x_k(p_R)$ and $r_{SF,k}(p_R)$.

Whether a solution for the channel estimation problem exists, depends on the condition of the matrix $C_{IQ,SF}$.

The zero forcing channel estimate follows to

$$x_k(p_R) = pinv(C_{IQ,SF}) \cdot r_{SF,k}(p_R)$$

This is the SISO case.

The physical channel estimation problem Eq. 48 can be rewritten with Eq. 43 in matrix vector notation according to

$$\underbrace{\begin{bmatrix} r_{l,k}(p_R) \\ r_{l,k+1}(p_R) \end{bmatrix}}_{r_{l,k}(p_R)} = B \cdot W^T \cdot \underbrace{\begin{bmatrix} H_k(p_R,0) \\ H_k(p_R,1) \end{bmatrix}}_{H_k(p_R)} + \begin{bmatrix} n_{l,k} \\ n_{l,k+1} \end{bmatrix}$$

Eq. 71

with the standard conform precoding matrix

$$W = \begin{bmatrix} W(0,0) & W(0,1) \\ W(1,0) & W(1,1) \end{bmatrix},$$

Eq. 72

and the column vectors $H_k(p_R)$ and $r_{l,k}(p_R)$ and $(\cdot)^T$ denoting the transpose operation.

Whether a solution for the channel estimation problem exists, depends on the condition of the matrix

$$B \cdot W^T = \begin{bmatrix} a_{l,k}(0) & a_{l,k+1}(1) \\ a_{l,k}(0) & a_{l,k+1}(1) \end{bmatrix} \cdot \begin{bmatrix} W(0,0) & W(1,0) \\ W(0,1) & W(1,1) \end{bmatrix}.$$

$$\text{Eq. 73}$$

In case of two transmit antennas and two layers, the precoding matrix is an identity matrix according to the standard. So whether a solution for the physical channel estimation problem exists, depends only on the condition of the matrix *B*. That is the same as for effective MISO channel estimation.

The zero forcing channel estimate follows to

$$\hat{H}_k(p_R) = \left(B \cdot W^T\right)^{-1} \cdot r_{l,k}(p_R).$$

$$\text{Eq. 74}$$

To get a measurement signal for the transmit antennas and for MISO Time Alignment Measurement in the special Case with one layer, the physical channels from the transmit antennas to the receive antenna(s) are required.

In case of only one layer $a_{l,k}(1) = a_{l,k+1}(1) = 0$ and $W(0,1) = W(1,1) = 0$. The matrix $B \cdot W^T$ follows to

$$B \cdot W^T = \begin{bmatrix} a_{l,k}(0) & 0 \\ a_{l,k+1}(0) & 0 \end{bmatrix} \cdot \begin{bmatrix} W(0,0) & W(1,0) \\ 0 & 0 \end{bmatrix} = \begin{bmatrix} a_{l,k}(0) \cdot W(0,0) & a_{l,k}(0) \cdot W(1,0) \\ a_{l,k+1}(0) \cdot W(0,0) & a_{l,k+1}(0) \cdot W(1,0) \end{bmatrix}.$$

$$\text{Eq. 75}$$

The determinant of the matrix is zero. Due to that the problem Eq. 71 is ill conditioned in case of one layer and the physical MISO channels cannot be estimated. Due to that a MISO Time Alignment Measurement cannot be performed in case of only one layer.

The physical channel estimation problem Eq. 47 can be rewritten with Eq. 51 in matrix vector notation according to

$$\underbrace{\begin{bmatrix} r_{l,k}(p_R) \\ r_{l,k+1}(p_R) \\ r_{l,k+2}(p_R) \\ r_{l,k+3}(p_R) \end{bmatrix}}_{r_{l,k}(p_R)} = C \cdot W^T \cdot \underbrace{\begin{bmatrix} H_k(p_R,0) \\ H_k(p_R,1) \\ H_k(p_R,2) \\ H_k(p_R,3) \end{bmatrix}}_{H_k(p_R)} + \begin{bmatrix} n_{l,k} \\ n_{l,k+1} \\ n_{l,k+2} \\ n_{l,k+3} \end{bmatrix}$$

$$\text{Eq. 76}$$

with the standard conform precoding matrix

$$W = \begin{bmatrix} W(0,0) & W(0,1) & W(0,2) & W(0,3) \\ W(1,0) & W(1,1) & W(1,2) & W(1,3) \\ W(2,0) & W(2,1) & W(2,2) & W(2,3) \\ W(3,0) & W(3,1) & W(3,2) & W(3,3) \end{bmatrix},$$

<div align="right">Eq. 77</div>

and the column vectors $H_k(p_R)$ and $r_{l,k}(p_R)$ and $(\cdot)^T$ denoting the transpose operation.

Whether a solution for the channel estimation problem exists, depends on the condition of the matrix

$$C \cdot W^T.$$

<div align="right">Eq. 78</div>

In case of four transmit antennas and four layers, the precoding matrix is an identity matrix according to the standard. So whether a solution for the physical channel estimation problem exists, depends only on the condition of the matrix $C$. That is the same as for effective MISO channel estimation.

The zero forcing channel estimate follows to

$$\hat{H}_k(p_R) = \left( C \cdot W^T \right)^{-1} \cdot r_{l,k}(p_R).$$

<div align="right">Eq. 79</div>

In case of three layers, always four antennas are used for the special case with less than four layers. In case of three layers, $a_{l,k}(4) = 0 \; \forall k$, the determinant of the matrix $C \cdot W^T$ is zero. In case of one or two layers, the determinant of the matrix $C \cdot W^T$ is zero as well. Due to that the problem Eq. 76 is ill conditioned in case of less than four layers and the physical MISO channels cannot be estimated.

The effective MISO channel coefficients $\tilde{H}_k(p_R, \lambda)$ depend on the physical MISO channel coefficients $H_k(p_R, p_T)$ according to

$$\underbrace{\begin{bmatrix} \tilde{H}_k(p_R, 0) \\ \tilde{H}_k(p_R, 1) \end{bmatrix}}_{\tilde{H}_k(p_R)} = W^T \cdot \underbrace{\begin{bmatrix} H_k(p_R, 0) \\ H_k(p_R, 1) \end{bmatrix}}_{H_k(p_R)}$$

<div align="right">Eq. 80</div>

for two transmit antennas and two layers.

For four transmit antennas and four layers, they depend according to

$$\underbrace{\begin{bmatrix} \widetilde{H}_k(p_R,0) \\ \widetilde{H}_k(p_R,1) \\ \widetilde{H}_k(p_R,2) \\ \widetilde{H}_k(p_R,3) \end{bmatrix}}_{\widetilde{H}_k(p_R)} = W^T \cdot \underbrace{\begin{bmatrix} H_k(p_R,0) \\ H_k(p_R,1) \\ H_k(p_R,2) \\ H_k(p_R,3) \end{bmatrix}}_{H_k(p_R)} .$$

Eq. 81

In Fig. 5 results of the iteration are shown. The x-axis shows the number of iterations. The y-axis shows the error vector magnitude. The different curves correspond to measuring signals of different signal-to-noise-ratio. One can clearly see that the process converges even for 60 dB after only a few iterations.

The invention is not limited to the examples and especially not to the communication standard LTE. The invention discussed above can be applied to many different communication standards. Also it is important to note that the order of the function blocks within the iteration means is not limited to the order described above. The parameter estimation means, the I/Q offset estimation means and the channel estimation means can be placed in any order. The characteristics of the exemplary embodiments can be used in any advantageous combination.

**Claims**

1. Measuring device for determining at least a first parameter and a second parameter of a measuring signal, comprising:

   - receiving means (10) for receiving the measuring signal,
   - processing means (11, 13),

   wherein the processing means (11, 13) comprise:

   - parameter setting means (20, 30) for setting an initial value of the first parameter,
   - iteration means (27, 37) for iteratively determining the parameters based upon the set initial value of the first parameter,

   **characterized in that**
   the measuring signal comprises a first signal and a second signal,
   that the first iteration means (27) comprise

   - first parameter estimation means (21) for jointly estimating carrier frequency offset and/or sample frequency offset and/or phase noise based upon initial starting values in a first iteration,
   - first I/Q offset estimation means (22) for estimating an I/Q offset based upon results of the first parameter estimation means (21), and
   - first channel estimation means (23) for estimating channel parameters based upon results of the first parameter estimation means (21) and the first I/Q offset estimation means (22),

   that the first parameter estimation means (21) are set up for using results of the first I/Q offset estimation means (22) and of the first channel estimation means (23) in further iterations,
   that the second iteration means (37) comprise

   - second parameter estimation means (31) for jointly estimating carrier frequency offset and/or sample frequency offset and/or phase noise based upon results of the first iteration means (27) and the determined data symbols,
   - second I/Q offset estimation means (32) for estimating an I/Q offset based upon results of the second parameter estimation (31) means, and
   - second channel estimation means (33) for estimating channel parameters based upon results of the second parameter estimation means (31) and the second I/Q offset estimation means (32),

that the second parameter estimation means (31) are set up for using results of the second I/Q offset estimation means (32) and of the second channel estimation means (33) in further iterations,
that the first parameter estimation means (21) and the second parameter estimation means (31) are set up for jointly estimating the carrier frequency offset and/or sample frequency offset and/or phase noise by deriving a cost function L with phase $\Phi$ and setting its differential of $\Phi$ to zero resulting in the following equation:

$$\frac{d}{d\Phi}L = \sum_k \sum_l \frac{d}{d\Phi}L_{l,k} = \sum_k \sum_l 2 \cdot \mathrm{Re}\left\{ r_{l,k}(p_R) \cdot \underbrace{\left[\left(\sum_{\lambda=0}^{L-1} \tilde{H}_k(p_R,\lambda) \cdot a_{l,k}(\lambda)\right) + b \cdot C_k\right]^*}_{= F_{l,k}(p_R)} \cdot j \cdot \exp(-j\,\Phi) \right\} \equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $C_k$ is an interference function,
- b is an I/Q offset,
- $F_{l,k}$ is equal to the term in the bracket,
- N is the number of streams,
- $\tilde{H}_k(p_R,\lambda)$ are the complex effective channel coefficients between stream $\lambda$ and receiving antenna $p_R$, and
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier k at OFDM symbol $l$.

2. Measuring device according to claim 1,
   **characterized in that**
   the measuring device is setup for measuring the measuring signal,
   the measuring signal comprises known pilot symbols and unknown data symbols, and
   the iteration means (27, 37) comprise

   - first iteration means (27) for iteratively determining a first parameter set of a signal derived from the measuring signal based on the pilot symbols, and
   - second iteration means (37) for iteratively determining a second parameter set of the signal derived from the measuring signal based on the known pilot symbols and the determined data symbols.

3. Measuring device according to claim 1 or 2,
   **characterized in that**
   the first parameter set and the second parameter set comprise carrier frequency offset and/or sampling frequency offset and/or phase noise and/or IQ offset and/or channel estimation, and/or
   the first parameter is carrier frequency offset or sampling frequency offset or phase noise or IQ offset or channel estimation.

4. Measuring device according to any of the claims 1 to 3,
   **characterized in that**
   the first signal and the second signal are individual antenna signals of a MIMO uplink of a device under test (2), and simultaneous non-identical pilot symbols are present within the first signal and the second signal.

5. Measuring device according to any of the claims 1 to 4,
   **characterized in that**
   that the first I/Q offset estimation means (22) and the second I/Q offset estimation means (32) are set up for determining the I/Q offset by deriving a cost function L with the I/Q b and setting its differential with respect to b to zero resulting in the following equations:

$$\frac{d}{db}L = \sum_k \sum_l \frac{d}{db}L_{l,k}$$

$$= \sum_k \sum_l -2 \cdot \mathrm{Re}\left\{\left[\left[r_{l,k}(p_R) \cdot \exp(-\mathrm{j}\,\Phi) - \left(\sum_{\lambda=0}^{L-1} \tilde{H}_k(p_R,\lambda) \cdot a_{l,k}(\lambda)\right)\right]\right] \cdot C_k^*\right\} + \sum_k \sum_l |C_k|^2 \cdot 2 \cdot \mathrm{Re}\{b\} \equiv 0$$

$$b(p_R) = \frac{\displaystyle\sum_k \sum_l \left[r_{l,k}(p_R) \cdot \exp(-\mathrm{j}\,\Phi) - \left(\sum_{\lambda=0}^{L-1} \tilde{H}_k(p_R,\lambda) \cdot a_{l,k}(\lambda)\right)\right] \cdot C_k^*}{\displaystyle\sum_k \sum_l |C_k|^2}$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- b is the I/Q offset,
- N is the number of streams,
- $\tilde{H}_k(p_R,\lambda)$ are the complex effective channel coefficients between stream $\lambda$ and receiving antenna $p_R$,
- $a_{l,k}(\lambda)$ is in case of the first iteration means the pilot symbol of stream $\lambda$ on subcarrier k at OFDM symbol $l$ and in case of the second iteration means the pilot and/or the data symbol of stream $\lambda$ on subcarrier k at OFDM symbol $l$, and
- $\Phi$ is the phase of the measuring signal.

6. Measuring device according to any of the claims 1 to 5,
**characterized in that**
the first channel estimation means (23) and the second channel estimation means (33) are set up for determining the channel parameters deriving a cost function L with
$\tilde{H}_k(p_R,\lambda_i)$ and setting its differential of $\tilde{H}_k(p_R,\lambda_i)$ to zero resulting in the following equations:

$$\frac{d}{d\tilde{H}_k(p_R,\lambda_i)}L = \sum_k \sum_l \frac{d}{d\tilde{H}_k(p_R,\lambda_i)}L_{l,k}$$

$$= \sum_k \sum_l -2 \cdot \mathrm{Re}\left\{\left[r_{l,k}(p_R) \cdot \exp(-\mathrm{j}\,\Phi) - b \cdot C_k\right] \cdot a_{l,k}^*(\lambda_i)\right\} + \sum_k \sum_l 2 \cdot \mathrm{Re}\left\{\left(\sum_{\lambda=0}^{L-1} \tilde{H}_k(p_R,\lambda) \cdot a_{l,k}(\lambda)\right) \cdot a_{l,k}^*(\lambda_i)\right\} \equiv 0$$

$$\sum_k \sum_l \left[r_{l,k}(p_R) \cdot \exp(-\mathrm{j}\,\Phi) - b(p_R) \cdot C_k\right] = \sum_k \sum_l \left(\sum_{\lambda=0}^{L-1} \tilde{H}_k(p_R,\lambda) \cdot a_{l,k}(\lambda)\right)$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- b is the I/Q offset,
- N is the number of streams,
- $\tilde{H}_k(p_R,\lambda)$ are the complex effective channel coefficients between stream $\lambda$ and receive antenna $p_R$, and
- $a_{l,k}(\lambda)$ is in case of the first iteration means the pilot symbol of stream $\lambda$ on subcarrier k at OFDM symbol $l$ and in case of the second iteration means the pilot and/or the data symbol of stream $\lambda$ on subcarrier $k$ at OFDM symbol $l$.

7. Measuring device according to any of the claims 1 to 6,

**characterized in that**
the processing means (11, 12, 13) comprise error vector magnitude detection means (36) for calculating an error vector magnitude of the measuring signal based upon the second parameter set of the signal derived from the measuring signal.

8. Measuring system comprising a measuring device (1) according to any one of the claims 1 to 7 and coupling means (5) for creating the measuring signal by adding the first signal and the second signal.

9. Measuring method for determining at least a first parameter and a second parameter of a measuring signal, comprising:

  - receiving the measuring signal,
  - processing the received measuring signal,
  - setting an initial value of the first parameter, and
  - iteratively determining the parameters based upon the set initial value of the first parameter,
  **characterized in that**
  the measuring signal comprises a first signal and a second signal,
  the method further comprises:
  - jointly estimating carrier frequency offset and/or sample frequency offset and/or phase noise based upon initial starting values in a first iteration,
  - estimating an I/Q offset based upon results of the first parameter estimation (21),
  - estimating channel parameters based upon results of the first parameter estimation (21) and the first I/Q offset estimation (22),
  - using results of the first I/Q offset estimation and of the first channel estimation in further iterations,
  - jointly estimating carrier frequency offset and/or sample frequency offset and/or phase noise based upon results of the first iteration and the determined data symbols,
  - estimating an I/Q offset based upon results of the second parameter estimation,
  - estimating channel parameters based upon results of the second parameter estimation and the second I/Q offset estimation,
  - using results of the second I/Q offset estimation and of the second channel estimation in further iterations,
  - jointly estimating the carrier frequency offset and/or sample frequency offset and/or phase noise by deriving a cost function L with phase $\Phi$ and setting its differential of $\Phi$ to zero resulting in the following equation:

$$\frac{d}{d\Phi}L = \sum_k \sum_l \frac{d}{d\Phi}L_{l,k} = \sum_k \sum_l 2 \cdot \mathrm{Re}\left\{ r_{l,k}(p_R) \cdot \underbrace{\left[\left(\sum_{\lambda=0}^{L-1} \widetilde{H}_k(p_R,\lambda) \cdot a_{l,k}(\lambda)\right) + b \cdot C_k\right]^*}_{= F_{l,k}(p_R)} \cdot j \cdot \exp(-j\,\Phi) \right\} \equiv 0$$

  wherein
  - $L_{l,k}$ is the calculated cost function on subcarrier $k$ at OFDM symbol $l$,
  - $r_{l,k}(p_R)$ is a received symbol in the frequency domain on subcarrier $k$ at OFDM symbol $l$ of receiving antenna $p_R$,
  - $C_k$ is an interference function,
  - b is an I/Q offset,
  - $F_{l,k}$ is equal to the term in the bracket,
  - N is the number of streams,
  - $\widetilde{H}_k(p_R,\lambda)$ are the complex effective channel coefficients between stream $\lambda$ and receiving antenna $p_R$, and
  - $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$.

10. Measuring method according to claim 9,
  **characterized in that**
  the measuring method is setup for measuring the measuring signal,
  the measuring signal comprises known pilot symbols and unknown data symbols, and
  a first parameter set of a signal derived from the measuring signal is iteratively determined based on the pilot symbols, and

a second parameter set of the signal derived from the measuring signal is iteratively determined based on the known pilot symbols and the determined data symbols.

11. Measuring method according to claim 9 or 10,
**characterized in that**
the first parameter set and the second parameter set comprise carrier frequency offset and/or sampling frequency offset and/or phase noise and/or IQ offset and/or channel estimation, and/or
the first parameter is carrier frequency offset or sampling frequency offset or phase noise or IQ offset or channel estimation.

12. Measuring method according to any of the claims 9 to 11,
**characterized in that**
the first signal and the second signal are individual antenna signals of a MIMO uplink of a device under test (2), and simultaneous non-identical pilot symbols are present within the first signal and the second signal.

13. Measuring method according to any of the claims 9 to 12,
**characterized by**
determining the I/Q offset by deriving a cost function L with the I/Q b and setting its differential with respect to b to zero resulting in the following equations:

$$\frac{d}{db}L = \sum_k \sum_l \frac{d}{db}L_{l,k}$$

$$= \sum_k \sum_l -2 \cdot \mathrm{Re}\left\{\left[r_{l,k}(p_R) \cdot \exp(-j\,\Phi) - \left(\sum_{\lambda=0}^{L-1}\tilde{H}_k(p_R,\lambda) \cdot a_{l,k}(\lambda)\right)\right] \cdot C_k^*\right\} + \sum_k \sum_l |C_k|^2 \cdot 2 \cdot \mathrm{Re}\{b\} \equiv 0$$

$$b(p_R) = \frac{\sum_k \sum_l \left[r_{l,k}(p_R) \cdot \exp(-j\,\Phi) - \left(\sum_{\lambda=0}^{L-1}\tilde{H}_k(p_R,\lambda) \cdot a_{l,k}(\lambda)\right)\right] \cdot C_k^*}{\sum_k \sum_l |C_k|^2}$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- b is the I/Q offset,
- N is the number of streams,
- $\tilde{H}_k(p_R,\lambda)$ are the complex effective channel coefficients between stream $\lambda$ and receiving antenna $p_R$,
- $a_{l,k}(\lambda)$ is in case of the first iteration means the pilot symbol of stream $\lambda$ on subcarrier k at OFDM symbol $l$ and in case of the second iteration means the pilot and/or the data symbol of stream $\lambda$ on subcarrier $k$ at OFDM symbol $l$, and
- $\Phi$ is the phase of the measuring signal.

14. Measuring method according to any of the claims 9 to 13,
**characterized by**
determining the channel parameters by deriving a cost function L with $\tilde{H}_k(p_R,\lambda_i)$ and setting its differential of $\tilde{H}_k(p_R,\lambda_i)$ to zero resulting in the following equations:

$$\frac{d}{d\,\tilde{H}_k(p_R,\lambda_i)}L = \sum_k \sum_l \frac{d}{d\,\tilde{H}_k(p_R,\lambda_i)}L_{l,k}$$

$$= \sum_k \sum_l -2\cdot\mathrm{Re}\left\{\left[r_{l,k}(p_R)\cdot\exp(-\mathrm{j}\,\Phi) - b\cdot C_k\right]\cdot a_{l,k}^{*}(\lambda_i)\right\} + \sum_k \sum_l 2\cdot\mathrm{Re}\left\{\left(\sum_{\lambda=0}^{L-1}\tilde{H}_k(p_R,\lambda)\cdot a_{l,k}(\lambda)\right)\cdot a_{l,k}^{*}(\lambda_i)\right\} \equiv 0$$

$$\sum_k \sum_l \left[r_{l,k}(p_R)\cdot\exp(-\mathrm{j}\,\Phi) - b(p_R)\cdot C_k\right] = \sum_k \sum_l \left(\sum_{\lambda=0}^{L-1}\tilde{H}_k(p_R,\lambda)\cdot a_{l,k}(\lambda)\right)$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- b is the I/Q offset,
- N is the number of streams,
- $\tilde{H}_k(p_R,\lambda)$ are the complex effective channel coefficients between stream $\lambda$ and receive antenna $p_R$, and
- $a_{l,k}(\lambda)$ is in case of the first iteration means the pilot symbol of stream $\lambda$ on subcarrier k at OFDM symbol $l$ and in case of the second iteration means the pilot and/or the data symbol of stream $\lambda$ on subcarrier $k$ at OFDM symbol $l$.

15. Measuring method according to any of the claims 9 to 14,
    **characterized by**
    calculating an error vector magnitude of the measuring signal based upon the second parameter set of the signal derived from the measuring signal.

16. A computer program with program code means for performing all steps according to any of the claims 9 to 15 if the program is executed on a computer or a digital signal processor.

17. A computer program product having a computer readable medium with stored program code means for performing all steps according to any of the claims 9 to 15 if the program is executed on a computer or a digital signal processor.

**Patentansprüche**

1. Messvorrichtung zur Bestimmung von mindestens einem ersten Parameter und einem zweiten Parameter eines Messsignals, aufweisend:

   - eine Empfangseinrichtung (10) zum Empfangen des Messsignals,
   - Verarbeitungseinrichtungen (11, 13),
   wobei die Verarbeitungseinrichtungen (11, 13) Folgendes aufweisen:
   - Parameterfestsetzungseinrichtungen (20, 30) zum Festsetzen eines Ausgangswertes des ersten Parameters,
   - Iterationseinrichtungen (27, 37) zum iterativen Bestimmen der Parameter auf der Basis des festgesetzten Ausgangswertes des ersten Parameters,

   **dadurch gekennzeichnet, dass**
   das Messsignal ein erstes Signal und ein zweites Signal aufweist,
   dass die ersten Iterationseinrichtungen (27)

   - eine erste Parameterschätzeinrichtung (21) zur gemeinsamen Schätzung von Trägerfrequenzoffset und/oder Abtastfrequenzoffset und/oder Phasenrauschen auf der Basis von ersten Ausgangswerten in einer ersten Iteration,
   - eine erste I/Q Offset-Schätzeinrichtung (22) zur Schätzung eines I/Q Offset auf der Basis von Ergebnissen der ersten Parameterschätzeinrichtung (21), und
   - eine erste Kanalschätzeinrichtung (23) zur Schätzung von Kanalparametern auf der Basis von Ergebnissen der ersten Parameterschätzeinrichtung (21) und der ersten I/Q Offset-Schätzeinrichtung (22) aufweisen,

dass die ersten Parameterschätzeinrichtungen (21) zur Verwendung von Ergebnissen der ersten I/Q Offset-Schätzeinrichtung (22) und der ersten Kanalschätzeinrichtung (23) in weiteren Iterationen eingerichtet sind,
dass die zweiten Iterationseinrichtungen (37)

- zweite Parameterschätzeinrichtungen (31) zur gemeinsamen Schätzung von Trägerfrequenzoffset und/oder Abtastfrequenzoffset und/oder Phasenrauschen auf der Basis von Ergebnissen der ersten Iterationseinrichtung (27) und der bestimmten Datensymbole,
- zweite I/Q Offset-Schätzeinrichtungen (32) zur Schätzung eines I/Q Offset auf der Basis von Ergebnissen der zweiten Parameterschätzeinrichtungen (31), und
- zweite Kanalschätzeinrichtungen (33) zur Schätzung von Kanalparametern auf der Basis von Ergebnissen der zweiten Parameterschätzeinrichtungen (31) und der zweiten I/Q Offset-Schätzeinrichtungen (32) aufweisen,

dass die zweiten Parameterschätzeinrichtungen (31) zur Verwendung von Ergebnissen der zweiten I/Q Offset-Schätzeinrichtungen (32) und der zweiten Kanalschätzeinrichtungen (33) in weiteren Iterationen eingerichtet sind,
dass die ersten Parameterschätzeinrichtungen (21) und die zweiten Parameterschätzeinrichtungen (31) zur gemeinsamen Schätzung des Trägerfrequenzoffset und/oder Abtastfrequenzoffset und/oder Phasenrauschen durch Ableitung einer Kostenfunktion L mit der Phase $\Phi$ und Festsetzen ihrer Differenz von $\Phi$ auf null eingerichtet sind, was zu der folgenden Gleichung führt:

$$\frac{d}{d\Phi}L = \sum_k \sum_l \frac{d}{d\Phi}L_{l,k} = \sum_k \sum_l 2 \cdot \mathrm{Re}\left\{ r_{l,k}(p_R) \cdot \underbrace{\left[\left(\sum_{\lambda=0}^{L-1} \tilde{H}_k(p_R,\lambda) \cdot a_{l,k}(\lambda)\right) + b \cdot C_k\right]^*}_{= F_{l,k}(p_R)} \cdot j \cdot \exp(-j\,\Phi) \right\} \equiv 0$$

wobei

- $L_{l,k}$ die berechnete Kostenfunktion auf dem Zwischenträger $k$ an dem OFDM Symbol $l$ ist,
- $r_{l,k}(p_R)$ ein empfangenes Symbol in dem Frequenzbereich auf dem Zwischenträger $k$ an dem OFDM Symbol $l$ der Empfangsantenne $p_R$ ist,
- $C_k$ eine Störfunktion ist,
- b ein I/Q Offset ist,
- $F_{l,k}$ gleich dem Term in der eckigen Klammer ist,
- N die Anzahl von Strömen darstellt,
- $\tilde{H}_k(p_R,\lambda)$ die komplexen effektiven Kanalkoeffizienten zwischen dem Strom $\lambda$ und der Empfangsantenne $p_R$ sind, und
- $a_{l,k}(\lambda)$ im Falle der ersten Iterationseinrichtung das Pilotsymbol des Stromes $\lambda$ auf dem Zwischenträger $k$ an dem OFDM Symbol $l$ und im Falle der zweiten Iterationseinrichtung das Pilot- und/oder das Datensymbol des Stromes $\lambda$ auf dem Zwischenträger k an dem OFDM Symbol $l$ ist.

2. Messvorrichtung nach Anspruch 1,
   **dadurch gekennzeichnet, dass**
   die Messvorrichtung zur Messung des Messsignals eingerichtet ist,
   das Messsignal bekannte Pilotsymbole und unbekannte Datensymbole aufweist, und
   die Iterationseinrichtungen (27, 37)

   - eine erste Iterationseinrichtung (27) zum iterativen Bestimmen eines ersten Parametersatzes eines von dem Messsignal abgeleiteten Signals auf der Basis der Pilotsymbole, und
   - eine zweite Iterationseinrichtung (37) zum iterativen Bestimmen eines zweiten Parametersatzes des von dem Messsignal abgeleiteten Signals auf der Basis der bekannten Pilotsymbole und der bestimmten Datensymbole aufweisen.

3. Messvorrichtung nach Anspruch 1 oder 2,
   **dadurch gekennzeichnet, dass**
   der erste Parametersatz und der zweite Parametersatz Trägerfrequenzoffset und/oder Abtastfrequenzoffset und/oder Phasenrauschen und/oder IQ Offset und/oder Kanalschätzung aufweisen, und/oder

der erste Parameter Trägerfrequenzoffset oder Abtastfrequenzoffset oder Phasenrauschen oder IQ Offset oder Kanalschätzung darstellt.

**4.** Messvorrichtung nach einem der Ansprüche 1 bis 3,
**dadurch gekennzeichnet, dass**
das erste Signal und das zweite Signal einzelne Antennensignale eines MIMO Uplinks eines Prüfobjektes (2) sind, und
gleichzeitige ungleiche Pilotsymbole innerhalb des ersten Signals und des zweiten Signals vorhanden sind.

**5.** Messvorrichtung nach einem der Ansprüche 1 bis 4,
**dadurch gekennzeichnet, dass**
die erste I/Q Offset-Schätzeinrichtung (22) und die zweite I/Q Offset-Schätzeinrichtung (32) zur Bestimmung des I/Q Offset durch Ableiten einer Kostenfunktion L mit dem I/Q b und Festsetzen ihrer Differenz bezüglich b auf null eingerichtet sind, was zu den folgenden Gleichungen führt:

$$\frac{d}{db}L = \sum_k \sum_l \frac{d}{db}L_{l,k}$$

$$= \sum_k \sum_l -2 \cdot \mathrm{Re}\left\{\left[r_{l,k}(p_R)\cdot\exp(-\mathrm{j}\,\Phi) - \left(\sum_{\lambda=0}^{L-1}\widetilde{H}_k(p_R,\lambda)\cdot a_{l,k}(\lambda)\right)\right]\cdot C_k^*\right\} + \sum_k \sum_l |C_k|^2 \cdot 2 \cdot \mathrm{Re}\{b\} \equiv 0$$

$$b(p_R) = \frac{\sum_k \sum_l \left[r_{l,k}(p_R)\cdot\exp(-\mathrm{j}\,\Phi) - \left(\sum_{\lambda=0}^{L-1}\widetilde{H}_k(p_R,\lambda)\cdot a_{l,k}(\lambda)\right)\right]\cdot C_k^*}{\sum_k \sum_l |C_k|^2}$$

wobei

- $L_{l,k}$ die berechnete Kostenfunktion auf dem Zwischenträger *k* an dem OFDM Symbol *l* ist,
- $r_{l,k}(p_R)$ ein empfangenes Symbol in dem Frequenzbereich auf dem Zwischenträger *k* an dem OFDM Symbol *l* der Empfangsantenne $p_R$ ist,
- b der I/Q Offset ist,
- N die Anzahl von Strömen ist,
- $\tilde{H}_k(p_R,\lambda)$ die komplexen effektiven Kanalkoeffizienten zwischen dem Strom $\lambda$ und der Empfangsantenne $p_R$ sind,
- $a_{l,k}(\lambda)$ im Falle der ersten Iterationseinrichtung das Pilotsymbol des Stromes $\lambda$ auf dem Zwischenträger *k* an dem OFDM Symbol *l* und im Falle der zweiten Iterationseinrichtung das Pilot- und/oder das Datensymbol des Stromes $\lambda$ auf dem Zwischenträger *k* an dem OFDM Symbol *l* ist, und
- $\Phi$ die Phase des Messsignals darstellt.

**6.** Messvorrichtung nach einem der Ansprüche 1 bis 5,
**dadurch gekennzeichnet, dass**
die erste Kanalschätzeinrichtung (23) und die zweite Kanalschätzeinrichtung (33) zur Bestimmung der Kanalparameter eingerichtet sind, die eine Kostenfunktion L mit $\tilde{H}_k(p_R,\lambda_i)$ ableiten und ihre Differenz von $\tilde{H}_k(p_R,\lambda_i)$ auf null setzen, was zu den folgenden Gleichungen führt:

$$\frac{d}{d\,\widetilde{H}_k(p_R,\lambda_i)}L = \sum_k \sum_l \frac{d}{d\,\widetilde{H}_k(p_R,\lambda_i)}L_{l,k}$$

$$= \sum_k \sum_l -2\cdot\mathrm{Re}\left\{\left[r_{l,k}(p_R)\cdot\exp(-\mathrm{j}\,\Phi) - b\cdot C_k\right]\cdot a_{l,k}^*(\lambda_i)\right\} + \sum_k \sum_l 2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^*(\lambda_i)\right\} \equiv 0$$

$$\sum_{k}\sum_{l}\left[r_{l,k}(p_R)\cdot\exp(-j\,\Phi)-b(p_R)\cdot C_k\right]=\sum_{k}\sum_{l}\left(\sum_{\lambda=0}^{L-1}\tilde{H}_k(p_R,\lambda)\cdot a_{l,k}(\lambda)\right)$$

wobei

- $L_{l,k}$ die berechnete Kostenfunktion auf dem Zwischenträger $k$ an dem OFDM Symbol $l$ ist,
- $r_{l,k}(p_R)$ ein empfangenes Symbol in dem Frequenzbereich auf dem Zwischenträger $k$ an dem OFDM Symbol $l$ der Empfangsantenne $p_R$ ist,
- b der I/Q Offset ist,
- N die Anzahl von Strömen ist,
- $\tilde{H}_k(p_R,\lambda)$ die komplexen effektiven Kanalkoeffizienten zwischen dem Strom $\lambda$ und der Empfangsantenne $p_R$ sind, und
- $a_{l,k}(\lambda)$ im Falle der ersten Iterationseinrichtung das Pilotsymbol des Stromes $\lambda$ auf dem Zwischenträger $k$ an dem OFDM Symbol $l$ und im Falle der zweiten Iterationseinrichtung das Pilot- und/oder das Datensymbol des Stromes $\lambda$ auf dem Zwischenträger $k$ an dem OFDM Symbol $l$ ist.

7. Messvorrichtung nach einem der Ansprüche 1 bis 6,
**dadurch gekennzeichnet, dass**
die Verarbeitungseinrichtungen (11, 12, 13) eine Fehlervektorgrößenerfassungseinrichtung (36) zur Berechnung einer Fehlervektorgröße des Messsignals auf der Basis des zweiten Parametersatzes des von dem Messsignal abgeleiteten Signals aufweisen.

8. Messsystem mit einer Messvorrichtung (1) nach einem der Ansprüche 1 bis 7 und einer Kopplungseinrichtung (5) zur Erzeugung des Messsignals durch Addieren des ersten Signals und des zweiten Signals.

9. Messverfahren zur Bestimmung von mindestens einem ersten Parameter und einem zweiten Parameter eines Messsignals, mit folgenden Schritten:

- Empfangen des Messsignals,
- Verarbeiten des empfangenen Messsignals,
- Festsetzen eines Ausgangswertes des ersten Parameters, und
- iteratives Bestimmen der Parameter auf der Basis des festgesetzten Ausgangswertes des ersten Parameters,

**dadurch gekennzeichnet, dass**
das Messsignal ein erstes Signal und ein zweites Signal aufweist,
das Verfahren ferner Folgendes aufweist:

- gemeinsames Schätzen von Trägerfrequenzoffset und/oder Abtastfrequenzoffset und/oder Phasenrauschen auf der Basis von anfänglichen Ausgangswerten in einer ersten Iteration,
- Schätzen eines I/Q Offset auf der Basis von Ergebnissen der ersten Parameterschätzung (21),
- Schätzen von Kanalparametern auf der Basis von Ergebnissen der ersten Parameterschätzung (21) und der ersten I/Q Offsetschätzung (22),
- Verwenden von Ergebnissen der ersten I/Q Offsetschätzung und der ersten Kanalschätzung in weiteren Iterationen,
- gemeinsames Schätzen von Trägerfrequenzoffset und/oder Abtastfrequenzoffset und/oder Phasenrauschen auf der Basis von Ergebnissen der ersten Iteration und der bestimmten Datensymbole,
- Schätzen eines I/Q Offset auf der Basis von Ergebnissen der zweiten Parameterschätzung,
- Schätzen von Kanalparametern auf der Basis von Ergebnissen der zweiten Parameterschätzung und der zweiten I/Q Offsetschätzung,
- Verwenden von Ergebnissen der zweiten I/Q Offsetschätzung und der zweiten Kanalschätzung in weiteren Iterationen,
- gemeinsames Schätzen des Trägerfrequenzoffset und/oder Abtastfrequenzoffset und/oder des Phasenrauschens durch Ableitung einer Kostenfunktion L mit Phase $\Phi$ und Festsetzen ihrer Differenz von $\Phi$ auf null, was zu der folgenden Gleichung führt:

$$\frac{d}{d\,\Phi}L = \sum_k \sum_l \frac{d}{d\,\Phi}L_{l,k} = \sum_k \sum_l 2 \cdot \mathrm{Re}\left\{ \underbrace{r_{l,k}(p_R) \cdot \left[\left(\sum_{\lambda=0}^{L-1} \widetilde{H}_k(p_R,\lambda) \cdot a_{l,k}(\lambda)\right) + b \cdot C_k\right]^*}_{= F_{l,k}(p_R)} \cdot j \cdot \exp(-j\,\Phi) \right\} \equiv 0$$

wobei

- $L_{l,k}$ die berechnete Kostenfunktion auf dem Zwischenträger $k$ an dem OFDM Symbol $l$ ist,
- $r_{l,k}(p_R)$ ein empfangenes Symbol in dem Frequenzbereich auf dem Zwischenträger $k$ an dem OFDM Symbol $l$ der Empfangsantenne $p_R$ ist,
- $C_k$ eine Störfunktion ist,
- b ein I/Q Offset ist,
- $F_{l,k}$ gleich dem Term in der eckigen Klammer ist,
- N die Anzahl von Strömen ist,
- $\widetilde{H}_k(p_R,\lambda)$ die komplexen effektiven Kanalkoeffizienten zwischen dem Strom $\lambda$ und der Empfangsantenne $p_R$ sind, und
- $a_{l,k}(\lambda)$ im Falle der ersten Iterationseinrichtung das Pilotsymbol von Strom $\lambda$ auf dem Zwischenträger $k$ an dem OFDM Symbol $l$ und im Falle der zweiten Iterationseinrichtung das Pilot- und/oder das Datensymbol von Strom $\lambda$ auf dem Zwischenträger k an dem OFDM Symbol $l$ ist.

10. Messverfahren nach Anspruch 9,
**dadurch gekennzeichnet, dass**
das Messverfahren zur Messung des Messsignals eingerichtet ist,
das Messsignal bekannte Pilotsymbole und unbekannte Datensymbole aufweist, und
ein erster Parametersatz eines von dem Messsignal abgeleiteten Signals iterativ auf der Basis der Pilotsymbole bestimmt wird, und
ein zweiter Parametersatz des von dem Messsignal abgeleiteten Signals iterativ auf der Basis der bekannten Pilotsymbolen und der bestimmten Datensymbole bestimmt wird.

11. Messverfahren nach Anspruch 9 oder 10,
**dadurch gekennzeichnet, dass**
der erste Parametersatz und der zweite Parametersatz Trägerfrequenzoffset und/oder Abtastfrequenzoffset und/oder Phasenrauschen und/oder I/Q Offset und/oder Kanalschätzung aufweisen, und/oder
der erste Parameter Trägerfrequenzoffset oder Abtastfrequenzoffset oder Phasenrauschen oder IQ Offset oder Kanalschätzung darstellt.

12. Messverfahren nach einem der Ansprüche 9 bis 11,
**dadurch gekennzeichnet, dass**
das erste Signal und das zweite Signal einzelne Antennensignale eines MIMO Uplinks eines Prüfobjektes (2) sind, und
gleichzeitige nicht identische Pilotsymbole in dem ersten Signal und dem zweiten Signal vorhanden sind.

13. Messverfahren nach einem der Ansprüche 9 bis 12,
**gekennzeichnet durch**
das Bestimmen des I/Q Offset durch Ableiten einer Kostenfunktion L mit dem I/Q b und Festsetzen ihrer Differenz bezüglich b auf null, was zu den folgenden Gleichungen führt:

$$\frac{d}{d\,b}L = \sum_k \sum_l \frac{d}{d\,b}L_{l,k}$$

$$= \sum_k \sum_l -2 \cdot \mathrm{Re}\left\{ \left[r_{l,k}(p_R) \cdot \exp(-j\,\Phi) - \left(\sum_{\lambda=0}^{L-1} \widetilde{H}_k(p_R,\lambda) \cdot a_{l,k}(\lambda)\right)\right] \cdot C_k^* \right\} + \sum_k \sum_l |C_k|^2 \cdot 2 \cdot \mathrm{Re}\{b\} \equiv 0$$

$$b(p_R) = \frac{\sum_k \sum_l \left[ r_{l,k}(p_R) \cdot \exp(-j\,\Phi) - \left( \sum_{\lambda=0}^{L-1} \widetilde{H}_k(p_R,\lambda) \cdot a_{l,k}(\lambda) \right) \right] \cdot C_k^{\,\bullet}}{\sum_k \sum_l |C_k|^2}$$

wobei

- $L_{l,k}$ die berechnete Kostenfunktion auf dem Zwischenträger $k$ an dem OFDM Symbol $l$ darstellt,
- $r_{l,k}(p_R)$ ein empfangenes Symbol in dem Frequenzbereich auf dem Zwischenträger $k$ an dem OFDM Symbol $l$ der Empfangsantenne $p_R$ ist,
- b der I/Q Offset ist,
- N die Anzahl von Strömen ist,
- $\widetilde{H}_k(p_R,\lambda)$ die komplexen effektiven Kanalkoeffizienten zwischen dem Strom $\lambda$ und der Empfangsantenne $p_R$ sind, und
- $a_{l,k}(\lambda)$ im Falle der ersten Iterationseinrichtung das Pilotsymbol von Strom $\lambda$ auf dem Zwischenträger $k$ an dem OFDM Symbol $l$ und im Falle der zweiten Iterationseinrichtung das Pilot- und/oder das Datensymbol von Strom $\lambda$ auf dem Zwischenträger $k$ an dem OFDM Symbol $l$ ist, und
- $\Phi$ die Phase des Messsignals darstellt.

**14.** Messverfahren nach einem der Ansprüche 9 bis 13,
**gekennzeichnet durch**
Bestimmen der Kanalparameter durch Ableiten einer Kostenfunktion L mit $\widetilde{H}_k(p_R,\lambda_i)$ und Festsetzen ihrer Differenz von $\widetilde{H}_k(p_R,\lambda_i)$ auf null, was zu den folgenden Gleichungen führt:

$$\frac{d}{d\,\widetilde{H}_k(p_R,\lambda_i)} L = \sum_k \sum_l \frac{d}{d\,\widetilde{H}_k(p_R,\lambda_i)} L_{l,k}$$

$$= \sum_k \sum_l -2 \cdot \mathrm{Re}\left\{\left[ r_{l,k}(p_R) \cdot \exp(-j\,\Phi) - b \cdot C_k \right] \cdot a_{l,k}^{\,\bullet}(\lambda_i) \right\} + \sum_k \sum_l 2 \cdot \mathrm{Re}\left\{ \left( \sum_{\lambda=0}^{L-1} \widetilde{H}_k(p_R,\lambda) \cdot a_{l,k}(\lambda) \right) \cdot a_{l,k}^{\,\bullet}(\lambda_i) \right\} \equiv 0$$

$$\sum_k \sum_l \left[ r_{l,k}(p_R) \cdot \exp(-j\,\Phi) - b(p_R) \cdot C_k \right] = \sum_k \sum_l \left( \sum_{\lambda=0}^{L-1} \widetilde{H}_k(p_R,\lambda) \cdot a_{l,k}(\lambda) \right)$$

wobei

- $L_{l,k}$ die berechnete Kostenfunktion auf dem Zwischenträger $k$ an dem OFDM Symbol $l$ ist,
- $r_{l,k}(p_R)$ ein empfangenes Symbol in dem Frequenzbereich auf dem Zwischenträger $k$ an dem OFDM Symbol $l$ der Empfangsantenne $p_R$ ist,
- b der I/Q Offset ist,
- N die Anzahl von Strömen ist,
- $\widetilde{H}_k(p_R,\lambda)$ die komplexen effektiven Kanalkoeffizienten zwischen dem Strom $\lambda$ und der Empfangsantenne $p_R$ sind, und
- $a_{l,k}(\lambda)$ im Falle der ersten Iterationseinrichtung das Pilotsymbol von Strom $\lambda$ auf dem Zwischenträger $k$ an dem OFDM Symbol $l$ und im Falle der zweiten Iterationseinrichtung das Pilot- und/oder das Datensymbol von Strom $\lambda$ auf dem Zwischenträger k an dem OFDM Symbol $l$ ist.

**15.** Messverfahren nach einem der Ansprüche 9 bis 14,
**gekennzeichnet durch**
Berechnen einer Fehlervektorgröße des Messsignals auf der Basis des zweiten Parametersatzes des von dem Messsignal abgeleiteten Signals.

**16.** Computerprogramm mit Programmcodeeinrichtungen zur Durchführung aller Schritte nach einem der Ansprüche 9 bis 15, wenn das Programm auf einem Computer oder einem digitalen Signalprozessor ausgeführt wird.

**17.** Computerprogrammprodukt mit einem computerlesbaren Medium mit gespeicherten Programmcodeeinrichtungen zur Durchführung aller Schritte nach einem der Ansprüche 9 bis 15, wenn das Programm auf einem Computer oder einem digitalen Signalprozessor ausgeführt wird.

**Revendications**

**1.** Dispositif de mesure pour déterminer au moins un premier paramètre et un second paramètre d'un signal de mesure, comportant :

- des moyens de réception (10) pour recevoir le signal de mesure,
- des moyens de traitement (11, 13),

dans lequel les moyens de traitement (11, 13) comportent :

- des moyens de paramétrage (20, 30) pour fixer une valeur initiale du premier paramètre,
- des moyens d'itération (27, 37) pour déterminer de manière itérative les paramètres sur la base de la valeur initiale fixée du premier paramètre,

**caractérisé en ce que**
le signal de mesure comporte un premier signal et un second signal,
les premiers moyens d'itération (27) comportent :

- des premiers moyens d'estimation de paramètre (21) pour estimer conjointement un décalage des fréquences porteuses et/ou un décalage de fréquences d'échantillonnage et/ou un bruit de phase sur la base de valeurs de départ initiales dans une première itération,
- des premiers moyens d'estimation de décalage I/Q (22) pour estimer un décalage I/Q sur la base de résultats des premiers moyens d'estimation de paramètre (21), et
- des premiers moyens d'estimation de canaux (23) pour estimer des paramètres de canaux sur la base de résultats des premiers moyens d'estimation de paramètre (21) et des premiers moyens d'estimation de décalage I/Q (22),

les premiers moyens d'estimation de paramètre (21) sont configurés pour utiliser des résultats des premiers moyens d'estimation de décalage I/Q (22) et des premiers moyens d'estimation de canaux (23) dans des itérations supplémentaires,
les seconds moyens d'itération (37) comportent :

- des seconds moyens d'estimation de paramètre (31) pour estimer conjointement un décalage des fréquences porteuses et/un décalage de fréquences d'échantillonnage et/ou un bruit de phase sur la base de résultats des premiers moyens d'itération (27) et des symboles de données déterminés,
- des seconds moyens d'estimation de décalage I/Q (32) pour estimer un décalage I/Q sur la base de résultats des seconds moyens d'estimation de paramètre (31), et
- des seconds moyens d'estimation de canaux (33) pour estimer des paramètres de canaux sur la base de résultats des seconds moyens d'estimation de paramètre (31) et des seconds moyens d'estimation de décalage I/Q (32),

les seconds moyens d'estimation de paramètre (31) sont configurés pour utiliser des résultats des seconds moyens d'estimation de décalage I/Q (32) et des seconds moyens d'estimation de canaux (33) dans des itérations supplémentaires,
les premiers moyens d'estimation de paramètre (21) et les seconds moyens d'estimation de paramètre (31) sont configurés pour estimer conjointement le décalage des fréquences porteuses et/ou le décalage de fréquences d'échantillonnage et/ou le bruit de phase en déduisant une fonction de coût L avec une phase $\Phi$ et en fixant son différentiel de $\Phi$ à zéro, le résultat étant l'équation suivante :

$$\frac{d}{d\Phi}L = \sum_{k}\sum_{l}\frac{d}{d\Phi}L_{l,k} = \sum_{k}\sum_{l}2\cdot\mathrm{Re}\left\{r_{l,k}(p_R)\cdot\underbrace{\left[\left(\sum_{\lambda=0}^{L-1}\tilde{H}_k(p_R,\lambda)\cdot a_{l,k}(\lambda)\right)+b\cdot C_k\right]^{*}}_{=F_{l,k}(p_R)}\cdot j\cdot\exp(-j\,\Phi)\right\}\equiv 0$$

dans laquelle

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- $C_k$ est une fonction d'interférence,
- b est un décalage I/Q,
- $F_{1,k}$ est égal au terme entre accolades,
- N est le nombre de flux,
- $\tilde{H}_k(p_R,\lambda)$ sont les coefficients de canaux efficaces complexes entre le flux $\lambda$ et l'antenne de réception $p_R$, et
- $a_{l,k}(\lambda)$ est, dans le cas des premiers moyens d'itération, le symbole pilote du flux $\lambda$ sur la sous-porteuse k sur le symbole OFDM l et, dans le cas des seconds moyens d'itération, le symbole pilote et/ou le symbole de données du flux $\lambda$ sur la sous-porteuse k sur le symbole OFDM l.

2. Dispositif de mesure selon la revendication 1, **caractérisé en ce que**
le dispositif de mesure est configuré pour mesurer le signal de mesure,
le signal de mesure comporte des symboles pilotes connus et des symboles de données inconnus, et
les moyens d'itération (27, 37) comportent :

- des premiers moyens d'itération (27) pour déterminer de manière itérative un premier ensemble de paramètres d'un signal issu du signal de mesure sur la base des symboles pilotes, et
- des seconds moyens d'itération (37) pour déterminer de manière itérative un second ensemble de paramètres du signal issu du signal de mesure sur la base des symboles pilotes connus et des symboles de données déterminés.

3. Dispositif de mesure selon la revendication 1 ou 2, **caractérisé en ce que**
le premier ensemble de paramètres et le second ensemble de paramètres comportent un décalage des fréquences porteuses et/ou un décalage de fréquence d'échantillonnage et/ou un bruit de phase et/ou un décalage I/Q et/ou une estimation de canaux, et/ou
le premier paramètre est un décalage des fréquences porteuses ou un décalage de fréquence d'échantillonnage ou un bruit de phase ou un décalage I/Q ou une estimation de canaux.

4. Dispositif de mesure selon l'une quelconque des revendications 1 à 3,
**caractérisé en ce que**
le premier signal et le second signal sont des signaux d'antenne individuels d'une liaison montante MIMO d'un dispositif en essai (2), et
des symboles pilotes non identiques simultanés sont présents à l'intérieur du premier signal et du second signal.

5. Dispositif de mesure selon l'une quelconque des revendications 1 à 4,
**caractérisé en ce que**
les premiers moyens d'estimation de décalage I/Q (22) et les seconds moyens d'estimation de décalage I/Q (32) sont configurés pour déterminer le décalage I/Q en déduisant une fonction de coût L avec le décalage I/Q b et en fixant son différentiel par rapport à b à zéro, le résultat étant les équations suivantes :

$$\frac{d}{db}L = \sum_{k}\sum_{l}\frac{d}{db}L_{l,k}$$

$$= \sum_{k}\sum_{l}-2\cdot\mathrm{Re}\left\{\left[r_{l,k}(p_R)\cdot\exp(-j\,\Phi)-\left(\sum_{\lambda=0}^{L-1}\tilde{H}_k(p_R,\lambda)\cdot a_{l,k}(\lambda)\right)\right]\cdot C_k^{*}\right\}+\sum_{k}\sum_{l}|C_k|^2\cdot 2\cdot\mathrm{Re}\{b\}\equiv 0$$

$$b(p_R) = \frac{\sum_k \sum_l \left[ r_{l,k}(p_R) \cdot \exp(-\mathrm{j}\,\Phi) - \left( \sum_{\lambda=0}^{L-1} \widetilde{H}_k(p_R, \lambda) \cdot a_{l,k}(\lambda) \right) \right] \cdot C_k^*}{\sum_k \sum_l |C_k|^2}$$

dans lesquelles

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- b est le décalage I/Q,
- N est le nombre de flux,
- $\widetilde{H}_k(p_R, \lambda)$ sont les coefficients de canaux efficaces complexes entre le flux $\lambda$ et l'antenne de réception $p_R$,
- $a_{l,k}(\lambda)$ est, dans le cas des premiers moyens d'itération, le symbole pilote du flux $\lambda$ sur la sous-porteuse k sur le symbole OFDM l et, dans le cas des seconds moyens d'itération, le symbole pilote et/ou le symbole de données du flux $\lambda$ sur la sous-porteuse k sur le symbole OFDM l, et
- $\Phi$ est la phase du signal de mesure.

6. Dispositif de mesure selon l'une quelconque des revendications 1 à 5,
   **caractérisé en ce que**
   les premiers moyens d'estimation de canaux (23) et les seconds moyens d'estimation de canaux (33) sont configurés pour déterminer les paramètres de canaux, déduire une fonction de coût L avec $\widetilde{H}_k(p_R, \lambda)$ et fixer son différentiel de $\widetilde{H}_k(p_R, \lambda)$ à zéro, le résultat étant les équations suivantes :

$$\frac{d}{d\,\widetilde{H}_k(p_R, \lambda_i)} L = \sum_k \sum_l \frac{d}{d\,\widetilde{H}_k(p_R, \lambda_i)} L_{l,k}$$

$$= \sum_k \sum_l -2 \cdot \mathrm{Re}\left\{ \left[ r_{l,k}(p_R) \cdot \exp(-\mathrm{j}\,\Phi) - b \cdot C_k \right] \cdot a_{l,k}^*(\lambda_i) \right\} + \sum_k \sum_l 2 \cdot \mathrm{Re}\left\{ \left( \sum_{\lambda=0}^{L-1} \widetilde{H}_k(p_R, \lambda) \cdot a_{l,k}(\lambda) \right) \cdot a_{l,k}^*(\lambda_i) \right\} \equiv 0$$

$$\sum_k \sum_l \left[ r_{l,k}(p_R) \cdot \exp(-\mathrm{j}\,\Phi) - b(p_R) \cdot C_k \right] = \sum_k \sum_l \left( \sum_{\lambda=0}^{L-1} \widetilde{H}_k(p_R, \lambda) \cdot a_{l,k}(\lambda) \right)$$

dans lesquelles

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- b est le décalage I/Q,
- N est le nombre de flux,
- $\widetilde{H}_k(p_R, \lambda)$ sont les coefficients de canaux efficaces complexes entre le flux $\lambda$ et l'antenne de réception $p_R$, et
- $a_{l,k}(\lambda)$ est, dans le cas des premiers moyens d'itération, le symbole pilote du flux $\lambda$ sur la sous-porteuse k sur le symbole OFDM l et, dans le cas des seconds moyens d'itération, le symbole pilote et/ou le symbole de données du flux $\lambda$ sur la sous-porteuse k sur le symbole OFDM l.

7. Dispositif de mesure selon l'une quelconque des revendications 1 à 6,
   **caractérisé en ce que**
   les moyens de traitement (11, 12, 13) comportent des moyens de détection de grandeur de vecteur d'erreur (36) pour calculer une grandeur de vecteur d'erreur du signal de mesure sur la base du second ensemble de paramètres du signal issu du signal de mesure.

8. Système de mesure comportant un dispositif de mesure (1) selon l'une quelconque des revendications 1 à 7 et des moyens de couplage (5) pour créer le signal de mesure en additionnant le premier signal et le second signal.

**9.** Procédé de mesure pour déterminer au moins un premier paramètre et un second paramètre d'un signal de mesure, comportant les étapes consistant à :

- recevoir le signal de mesure,
- traiter le signal de mesure reçu,
- fixer une valeur initiale du premier paramètre, et
- déterminer de manière itérative les paramètres sur la base de la valeur initiale fixée du premier paramètre, **caractérisé en ce que**

le signal de mesure comporte un premier signal et un second signal,
le procédé comporte en outre les étapes consistant à :

- estimer conjointement un décalage des fréquences porteuses et/ou un décalage de fréquence d'échantillonnage et/ou un bruit de phase sur la base de valeurs de départ initiales dans une première itération,
- estimer un décalage I/Q sur la base de résultats de la première estimation de paramètre (21),
- estimer des paramètres de canaux sur la base de résultats de la première estimation de paramètre (21) et de la première estimation de décalage I/Q (22),
- utiliser des résultats de la première estimation de décalage I/Q et de la première estimation de canaux dans des itérations supplémentaires,
- estimer conjointement un décalage des fréquences porteuses et/ou un décalage de fréquence d'échantillonnage et/ou un bruit de phase sur la base de résultats de la première itération et des symboles de données déterminés,
- estimer un décalage I/Q sur la base de résultats de la seconde estimation de paramètre,
- estimer des paramètres de canaux sur la base de résultats de la seconde estimation de paramètre et de la seconde estimation de décalage I/Q,
- utiliser des résultats de la seconde estimation de décalage I/Q et de la seconde estimation de canaux dans des itérations supplémentaires,
- estimer conjointement le décalage des fréquences porteuses et/ou le décalage de fréquence d'échantillonnage et/ou le bruit de phase en déduisant une fonction de coût L avec une phase $\Phi$ et fixer son différentiel de $\Phi$ à zéro, le résultat étant l'équation suivante :

$$\frac{d}{d\,\Phi}L = \sum_{k}\sum_{l}\frac{d}{d\,\Phi}L_{l,k} = \sum_{k}\sum_{l}2\cdot\mathrm{Re}\left\{r_{l,k}(p_R)\cdot\underbrace{\left[\left(\sum_{\lambda=0}^{L-1}\widetilde{H}_k(p_R,\lambda)\cdot a_{l,k}(\lambda)\right)+b\cdot C_k\right]^*}_{=\,F_{l,k}(p_R)}\cdot j\cdot\exp(-\mathrm{j}\,\Phi)\right\} \equiv 0$$

dans laquelle

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- $C_k$ est une fonction d'interférence,
- b est un décalage I/Q,
- $F_{1,k}$ est égal au terme entre accolades,
- N est le nombre de flux,
- $\widetilde{H}_k(p_R,\lambda)$ sont les coefficients de canaux efficaces complexes entre le flux $\lambda$ et l'antenne de réception $p_R$, et
- $a_{l,k}(\lambda)$ est, dans le cas des premiers moyens d'itération, le symbole pilote du flux $\lambda$ sur la sous-porteuse k sur le symbole OFDM l et, dans le cas des seconds moyens d'itération, le symbole pilote et/ou le symbole de données du flux $\lambda$ sur la sous-porteuse k sur le symbole OFDM l.

**10.** Procédé de mesure selon la revendication 9, **caractérisé en ce que**
le procédé de mesure est configuré pour mesurer le signal de mesure,
le signal de mesure comporte des symboles pilotes connus et des symboles de données inconnus, et
un premier ensemble de paramètres d'un signal issu du signal de mesure est déterminé de manière itérative sur la base des symboles pilotes, et
un second ensemble de paramètres du signal issu du signal de mesure est déterminé de manière itérative sur la base des symboles pilotes connus et des symboles de données déterminés.

11. Procédé de mesure selon la revendication 9 ou 10, **caractérisé en ce que**
le premier ensemble de paramètres et le second ensemble de paramètres comportent un décalage des fréquences porteuses et/ou un décalage de fréquence d'échantillonnage et/ou un bruit de phase et/ou un décalage I/Q et/ou une estimation de canaux, et/ou
le premier paramètre est un décalage des fréquences porteuses ou un décalage de fréquence d'échantillonnage ou un bruit de phase ou un décalage I/Q ou une estimation de canaux.

12. Procédé de mesure selon l'une quelconque des revendications 9 à 11,
**caractérisé en ce que**
le premier signal et le second signal sont des signaux d'antenne individuels d'une liaison montante MIMO d'un dispositif en essai (2), et
des symboles pilotes non identiques simultanés sont présents à l'intérieur du premier signal et du second signal.

13. Procédé de mesure selon l'une quelconque des revendications 9 à 12,
**caractérisé par** l'étape consistant à :

déterminer le décalage I/Q en déduisant une fonction de coût L avec le décalage I/Q b et en fixant son différentiel par rapport à b à zéro, le résultat étant les équations suivantes :

$$\frac{d}{db}L = \sum_k \sum_l \frac{d}{db}L_{l,k}$$

$$= \sum_k \sum_l -2 \cdot \text{Re}\left\{\left[r_{l,k}(p_R) \cdot \exp(-j\,\Phi) - \left(\sum_{\lambda=0}^{L-1} \tilde{H}_k(p_R,\lambda) \cdot a_{l,k}(\lambda)\right)\right] \cdot C_k^*\right\} + \sum_k \sum_l |C_k|^2 \cdot 2 \cdot \text{Re}\{b\} \equiv 0$$

$$b(p_R) = \frac{\sum_k \sum_l \left[r_{l,k}(p_R) \cdot \exp(-j\,\Phi) - \left(\sum_{\lambda=0}^{L-1} \tilde{H}_k(p_R,\lambda) \cdot a_{l,k}(\lambda)\right)\right] \cdot C_k^*}{\sum_k \sum_l |C_k|^2}$$

dans lesquelles

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- b est le décalage I/Q,
- N est le nombre de flux,
- $\tilde{H}_k(p_R,\lambda)$ sont les coefficients de canaux efficaces complexes entre le flux λ et l'antenne de réception $p_R$,
- $a_{l,k}(\lambda)$ est, dans le cas des premiers moyens d'itération, le symbole pilote du flux λ sur la sous-porteuse k sur le symbole OFDM l et, dans le cas des seconds moyens d'itération, le symbole pilote et/ou le symbole de données du flux λ sur la sous-porteuse k sur le symbole OFDM l, et
- Φ est la phase du signal de mesure.

14. Procédé de mesure selon l'une quelconque des revendications 9 à 13,
**caractérisé par** l'étape consistant à :

déterminer les paramètres de canaux en déduisant une fonction de coût L avec $\tilde{H}_k(p_R,\lambda)$ et en fixant son différentiel
de $\tilde{H}_k(p_R,\lambda)$ à zéro, le résultat étant les équations suivantes :

$$\sum_{k}\sum_{l}\Big[r_{l,k}(p_R)\cdot\exp(-\mathrm{j}\,\Phi)-b(p_R)\cdot C_k\Big]=\sum_{k}\sum_{l}\left(\sum_{\lambda=0}^{L-1}\widetilde{H}_k(p_R,\lambda)\cdot a_{l,k}(\lambda)\right)$$

$$\frac{d}{d\,\widetilde{H}_k(p_R,\lambda)}L=\sum_{k}\sum_{l}\frac{d}{d\,\widetilde{H}_k(p_R,\lambda)}L_{l,k}$$

$$=\sum_{k}\sum_{l}-2\cdot\mathrm{Re}\Big\{\big[r_{l,k}(p_R)\cdot\exp(-\mathrm{j}\,\Phi)-b\cdot C_k\big]\cdot a_{l,k}^{*}(\lambda)\Big\}+\sum_{k}\sum_{l}2\cdot\mathrm{Re}\left\{\left(\sum_{\lambda=0}^{L-1}\widetilde{H}_k(p_R,\lambda)\cdot a_{l,k}(\lambda)\right)\cdot a_{l,k}^{*}(\lambda)\right\}\equiv0$$

dans lesquelles

- $L_{1,k}$ est la fonction de coût calculée sur une sous-porteuse k sur un symbole OFDM l,
- $r_{l,k}(p_R)$ est un symbole reçu dans le domaine fréquentiel sur la sous-porteuse k sur le symbole OFDM l d'une antenne de réception $p_R$,
- b est le décalage I/Q,
- N est le nombre de flux,
- $\tilde{H}_k(p_R,\lambda)$ sont les coefficients de canaux efficaces complexes entre le flux $\lambda$ et l'antenne de réception $p_R$, et
- $a_{l,k}(\lambda)$ est, dans le cas des premiers moyens d'itération, le symbole pilote du flux $\lambda$ sur la sous-porteuse k sur le symbole OFDM l et, dans le cas des seconds moyens d'itération, le symbole pilote et/ou le symbole de données du flux $\lambda$ sur la sous-porteuse k sur le symbole OFDM l.

15. Procédé de mesure selon l'une quelconque des revendications 9 à 14,
   **caractérisé par** l'étape consistant à :
   calculer une grandeur de vecteur d'erreur du signal de mesure sur la base du second ensemble de paramètres du signal issu du signal de mesure.

16. Programme informatique avec des moyens de code de programme pour exécuter toutes les étapes selon l'une quelconque des revendications 9 à 15 si le programme est exécuté sur un ordinateur ou un processeur de signal numérique.

17. Produit de programme informatique ayant un support lisible par ordinateur avec des moyens de code de programme stockés pour exécuter toutes les étapes selon l'une quelconque des revendications 9 à 15 si le programme est exécuté sur un ordinateur ou un processeur de signal numérique.

**Fig. 1**

**Fig. 2**

```
┌─────────────────────────────────┐
│  Add a first signal and a second signal  │──── 100
│    Resulting in a measuring signal       │
└─────────────────────────────────┘
              │
              ▼
┌─────────────────────────────────┐
│      Receive measuring signal            │──── 101
└─────────────────────────────────┘
              │
              ▼
┌─────────────────────────────────┐
│   Estimate CFO, SFO, Phase noise         │──── 102
│          based on pilots                 │
└─────────────────────────────────┘
              │
              ▼
┌─────────────────────────────────┐
│   Estimate I/Q offset based on pilots    │──── 103
└─────────────────────────────────┘
              │
              ▼
┌─────────────────────────────────┐
│    Estimate channel based on pilots      │──── 104
└─────────────────────────────────┘
              │
              ▼
       ◇─────────────◇
  no   ╱   Converged?  ╲             ──── 105
 ◄─────◇               ◇
        ╲             ╱
         ◇───────────◇
              │ yes
              ▼
┌─────────────────────────────────┐
│  Compensate CFO, SFO, phase noise,       │──── 106
│    gain and channel parameters           │
└─────────────────────────────────┘
              │
              ▼
┌─────────────────────────────────┐
│         Correct distortions              │──── 107
└─────────────────────────────────┘
              │
              ▼
┌─────────────────────────────────┐
│        Decide data symbols               │──── 108
└─────────────────────────────────┘
```

# Fig. 3

```
┌─────────────────────────────────┐
│   Estimate CFO, SFO, Phase noise │ ⟋ 109
│      based on pilots and data    │
└─────────────────────────────────┘
              │
              ▼
┌─────────────────────────────────┐
│ Estimate I/Q offset based on pilots, data │ ⟋ 110
└─────────────────────────────────┘
              │
              ▼
┌─────────────────────────────────┐
│ Estimate channel based on pilots and data │ ⟋ 111
└─────────────────────────────────┘
              │
              ▼
         ◇ Converged? ◇ ⟋ 112
              │ yes
              ▼
┌─────────────────────────────────┐
│  Compensate CFO, SFO, phase noise, │ ⟋ 113
│    I/Q offset, channel parameters │
└─────────────────────────────────┘
              │
              ▼
┌─────────────────────────────────┐
│        Correct distortions       │ ⟋ 114
└─────────────────────────────────┘
              │
              ▼
┌─────────────────────────────────┐
│              EVM                 │ ⟋ 115
└─────────────────────────────────┘
```

no

Fig. 4

Fig. 5

**REFERENCES CITED IN THE DESCRIPTION**

**Patent documents cited in the description**

- DE 102011077390 A1

- WO 2008116534 A1